(19) Europäisches Patentamt / European Patent Office / Office européen des brevets

(11) **EP 4 570 746 A1**

(12) **EUROPEAN PATENT APPLICATION**
published in accordance with Art. 153(4) EPC

(43) Date of publication:
**18.06.2025 Bulletin 2025/25**

(21) Application number: 23852566.1

(22) Date of filing: **08.08.2023**

(51) International Patent Classification (IPC):
$C01B\ 21/064^{(2006.01)}$    $C01B\ 35/04^{(2006.01)}$
$C08L\ 101/00^{(2006.01)}$    $C08K\ 3/22^{(2006.01)}$
$C08K\ 3/38^{(2006.01)}$

(52) Cooperative Patent Classification (CPC):
C01B 21/064; C01B 35/04; C08K 3/22; C08K 3/38; C08L 101/00

(86) International application number:
**PCT/JP2023/028913**

(87) International publication number:
**WO 2024/034604 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 JP 2022128126**

(71) Applicant: **National University Corporation Kagawa University**
**Takamatsu-shi, Kagawa 760-8521 (JP)**

(72) Inventor: **KUSUNOSE, Takafumi**
**Takamatsu-shi, Kagawa 761-0396 (JP)**

(74) Representative: **Murgitroyd & Company**
**165-169 Scotland Street**
**Glasgow G5 8PL (GB)**

(54) **METHOD FOR PRODUCING GRANULAR BORON NITRIDE, AND GRANULAR BORON NITRIDE**

(57) The present invention provides a newly method for producing a boron nitride. The method for producing a boron nitride composition containing a granular boron nitride is subjecting an iron boride composition containing an iron boride to a heating treatment at 1900°C to 2300°C under a nitrogen gas atmosphere.

Fig. 1

(a)

(b)

# EP 4 570 746 A1

**Description**

Technical Field

The present invention relates to a boron nitride composition, more particularly, a boron nitride composition containing a granular boron nitride, and a production method thereof. Furthermore, the present invention relates to a resin composition containing such a granular boron nitride and a resin material, a formed body containing the granular boron nitride and a resin material that is obtained by forming such a resin composition, and a production method thereof.

Background Art

Boron nitrides (hereinafter, also referred to as "BN") are insulating ceramics, a variety of crystal forms such as c-BN having a diamond structure, h-BN having a graphite structure, and t-BN having a turbostratic structure are known.
Among these, the h-BN is excellent in terms of thermal conductivity, solid lubricity, chemical stability, and heat resistance, and an attempt is thus underway to enhance thermal conductivity by mixing the h-BN as a filler with resin materials having low thermal conductivity. Such resin materials are in use for heat dissipation members in integrated circuits in the electrical/electronic fields.
However, the h-BN has the same stacking structure as graphite and has large crystal anisotropy. The h-BN is macroscopically granular, but microscopically a stack of plate-like crystals. The plate-like crystals are connected together by strong covalent bonds in a plate-like crystal plane corresponding to the a-axis direction of the crystal, and a larger thermal conductivity of near 400 W/mK is exhibited in such direction. On the other hand, the plate-like crystals are stacked with weak van der Waals force bonds in the plate thickness direction corresponding to the c-axis direction, and merely a small thermal conductivity of approximately 1 to 2 W/mK is thus exhibited in such direction.
When, for example, a plate-like formed body is produced by forming a resin composition containing such a boron nitride blended with a resin material, a plate-like boron nitride strongly tends to be oriented in the plate surface direction of the formed body that is the flow direction of the resin composition during the forming, and the obtained formed body has an excellent thermal conductivity in the plate surface direction, but there is a problem in that only a low thermal conductivity is exhibited in the thickness direction. Therefore, there is a desire for improving the anisotropy of such a granular BN.
For example, Japanese Patent Laid-Open No. 2013-147363 discloses a method for producing a metal oxide-containing boron nitride including a step of mixing boron nitride, an oxide of at least one rare earth metal selected from yttrium, cerium, and ytterbium, and carbon, and performing a heating treatment under a non-oxidizing gas atmosphere. It is described that even in a case where a large amount of a boron nitride that is produced by this method is blended with a resin material for the purpose of improving thermal conductivity, solid lubricity, chemical stability, heat resistance, and the like, and a resin composition is thereby produced, it is possible to improve the thermal conductivity of a formed body to be molded in the thickness direction while favorably maintaining forming processability as a resin composition.
As a method for producing a granular boron nitride, International Publication No. WO 2020/195298 discloses a production method including heat-treating a mixture containing a boron nitride component, an oxide of a rare earth element, and calcium oxide under a non-oxidizing gas atmosphere. In the case of forming using a resin composition obtained by mixing a granular boron nitride that is obtained by this method with a resin material, the thermal conductivity of a formed body to be obtained improves, and additionally, in a preferable embodiment, anisotropy regarding the thermal conduction of the formed body is suppressed. It is described that, particularly, even in a case where a large amount of the boron nitride is mixed, it is possible to improve the thermal conductivity of the formed body to be obtained while maintaining favorable forming processability.
It is described that when a boron nitride that is obtained by these methods is mixed with a resin material and molded, it is possible to improve the thermal conductivity particularly in the thickness direction, but there is still room for further improvement in thermal conductivity to be achieved compared with the intrinsic thermal conductivity of the above-described boron nitride.

Citation List

Patent Literature

Patent Literature 1: Japanese Patent Laid-Open No. 2013-147363

Patent Literature 2: International Publication No. WO 2020/195298

Summary of Invention

Technical Problem

Therefore, there is a desire to newly provide a method for producing a granular boron nitride, preferably, a spherical boron nitride, and there is another desire to improve the thermal conductivity of a formed body that is obtained by mixing the granular, preferably, spherical boron nitride that is produced by such method as a filler with a resin material and molding the mixture and to enable the anisotropy of the thermal conductivity to be suppressed in a preferable embodiment.

Solution to Problem

As a result of intensive studies regarding the above-described problem, the present inventors have newly found that a boron nitride composition containing a granular boron nitride can be produced by subjecting an iron boride to a heating treatment under a nitrogen gas atmosphere for nitriding boron in the iron boride.

In a first aspect, the present invention provides a method for producing a boron nitride composition containing a granular boron nitride, characterized by comprising subjecting an iron boride composition containing an iron boride to a heating treatment under a nitrogen gas atmosphere for nitriding (more particularly, nitriding boron in the iron boride). In a preferable aspect of the present invention, the granular boron nitride also include a spherical boron nitride.

In a second aspect, the present invention provides a boron nitride composition containing a granular boron nitride that is obtained by the above-described production method. In the boron nitride composition, in addition to the granular boron nitride that is generated by nitriding, another component derived from an iron boride composition as a raw material (for example, an iron component that is generated as a by-product by the nitridation of boron in the iron boride (for example, iron oxide, iron borate, iron nitride, iron carbide (in a case where carbon is contained in the raw material), or the like), an unreacted iron boride, an impurity that is contained in the iron boride composition, or the like), an amorphous boron nitride that has failed to turn into a granular boron nitride, or the like can be contained. In a preferable aspect, the granular boron nitride also include a spherical boron nitride.

In a third aspect, the present invention provides a granular boron nitride that is contained in the above-described boron nitride composition, and in a preferable aspect, the granular boron nitride also includes a spherical boron nitride. This granular boron nitride can be obtained by subjecting the above-described boron nitride composition to any appropriate treatment to remove a component other than the granular boron nitride that is contained in the boron nitride composition (for example, the above-described different component), for example, at least a part of such a component, and preferably substantially all of such a component. Such removal may be, for example, a washing treatment of the boron nitride composition with an acid (for example, an acid aqueous solution) and, in another embodiment, may be a classification treatment for removing a granular boron nitride that is smaller and/or larger than a predetermined dimension. In a particularly preferable embodiment, the removal may be such a washing treatment and a subsequent classification treatment. In one embodiment, a granular boron nitride includes a spherical boron nitride, and in such a case, only a spherical boron nitride substantially having a predetermined grain size distribution width may be extracted with, for example, a classification treatment.

Therefore, in a fourth aspect, the present invention provides a method for producing a granular boron nitride, and this method is characterized by the fact that the boron nitride composition of the second aspect is acid-washed. In a preferable embodiment, the granular boron nitride also include a spherical boron nitride, and a spherical boron nitride having a predetermined grain diameter distribution width can be obtained by, for example, applying a classification treatment.

In a fifth aspect, the present invention provides a resin composition containing the boron nitride composition of the second aspect or the granular boron nitride of the third aspect, preferably, a spherical boron nitride, and a resin material. Furthermore, in a sixth aspect, the present invention provides a molding method of a formed body characterized in that molding is performed using such a resin material, and therefore, a method for producing a formed body. In a seventh aspect, the present invention provides a formed body that is produced by performing molding as described above.

Advantageous Effects of Invention

The present invention provides a new method for synthesizing a boron nitride. This synthesis method can be applied to a method for producing a boron nitride composition, and a boron nitride composition to be produced contains a granular boron nitride. In a preferable embodiment, the boron nitride composition also contains a spherical boron nitride. The boron nitride composition or granular boron nitride of the present invention can be used as a filler that can be blended in thermally conductive pastes, thermally conductive adhesives, resin compositions for a thermally conductive formed body and the like, and is capable of imparting improved thermal conductivity. In one preferable embodiment, the granular boron nitride has a spherical shape, and/or has large grain diameters, more preferably, has more uniform grain diameters, and is capable of imparting further-improved thermal conductivity and capable of suppressing the anisotropy of thermal conduction in formed bodies in which the granular boron nitride is blended.

Brief Description of Drawings

[Figure 1] Figure 1(a) and Figure 1(b) show examples of SEM (scanning electron microscope) photographs of a granular boron nitride that is contained in a boron nitride composition obtained in Example 1.

[Figure 2] Figure 2 shows an example of a SEM photograph of a granular boron nitride that is contained in a boron nitride composition obtained in Example 7.

[Figure 3] Figure 3 shows an example of a SEM photograph of a granular boron nitride that is contained in a boron nitride composition obtained in Example 14.

[Figure 4] Figure 4 shows an example of a SEM photograph of an iron boride composition obtained in Example 10.

[Figure 5] Figure 5 shows an example of a SEM photograph of an iron boride composition obtained in Example 1.

[Figure 6] Figure 6 shows an example of a SEM photograph of the granular boron nitride (before acid washing) that is contained in the boron nitride composition obtained in Example 1.

[Figure 7] Figure 7(a) is a SEM photograph of the granular boron nitride (before acid washing) obtained in Example 1, and Figure 7(b) to Figure 7(e) show grayscale EDS (energy dispersive X-ray spectroscopy) photographs that are obtained by performing color mapping analysis on a C element (Figure 7(b)), a N element (Figure 7(c)), a Fe element (Figure 7(d)), and an O element (Figure 7(e)) using EDS corresponding to the SEM photograph .

[Figure 8] Figure 8(a) is a SEM photograph of the granular boron nitride (after acid washing) obtained in Example 1, and Figure 8(b) to Figure 8(e) show grayscale EDS photographs that are obtained by performing color mapping analysis on a C element (Figure 8(b)), a N element (Figure 8(c)), a Fe element (Figure 8(d)), and an O element (Figure 8(e)) using EDS corresponding to the SEM photograph .

[Figure 9] Table 1 of Figure 9 shows the treatment conditions of boridation and nitridation in Examples 1 to 27 and the measurement results of the shapes, average grain diameters, grain size uniformity, and sphericities of granular boron nitrides that are contained in obtained boron nitride compositions.

[Figure 10] Table 2 of Figure 10 shows, as Reference Example 1 and Reference Example 2, the measurement results of the shapes, average grain diameters, grain size uniformity, and sphericities of granular boron nitrides obtained in Example 17 and Comparative Example 5 described in Patent Literature 2.

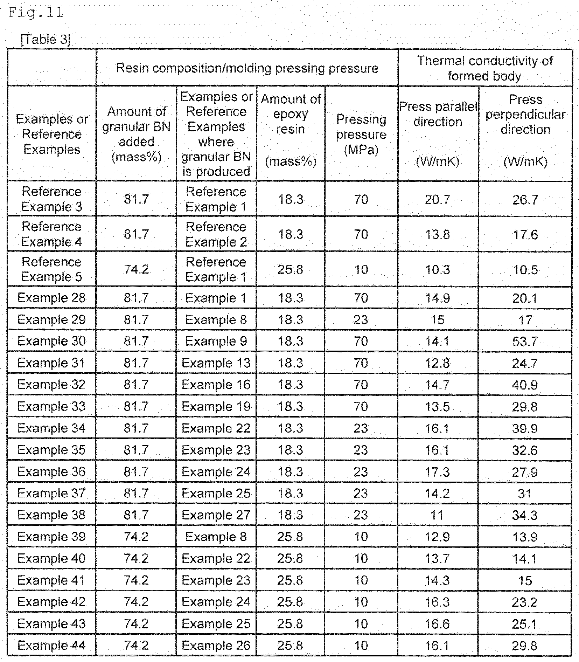

[Figure 11] Table 3 of Figure 11 shows the measurement results of the thermal conductivities of formed bodies produced using resin compositions of Examples 28 to 44 obtained by adding the granular boron nitrides (after acid washing) obtained in the examples of the present invention to an epoxy resin material followed by mixing them together with the compositions of the resin compositions and the pressing pressures. Furthermore, the measurement results of the thermal conductivities of formed bodies (Reference Examples 3 to 5) in the case of using the granular boron nitride of Reference Example 1 or 2 are also shown together.

Description of Embodiments

Next, a method for producing a boron nitride composition containing a granular boron nitride of the present invention and a boron nitride composition that is produced by the method will be mainly described in detail.

The granular boron nitrides that are contained in the boron nitride compositions produced by the method of the present invention are granular, have a variety of grain diameters, and have a wide distribution from powdery grains having extremely small grain diameters to particles having relatively large grain diameters, and these are collectively referred to as "granular boron nitrides." As described below, such granular boron nitrides have a variety of steric structures, and a granular boron nitride having a steric structure similar to a true sphere (specifically, a boron nitride having a sphericity, which will be described below, of 10 or less) will be referred to as "spherical boron nitride" for convenience.

Specifically, in one embodiment, a granular boron nitride has relatively small grain diameters and can be small grains that are too small to easily discriminate the steric structures thereof with a SEM photograph, that is, it is powdery In another embodiment, a granular boron nitride has relatively large grain diameters and can be, for example, spherical as described above. The average grain diameter of the granular boron nitride is normally 1 $\mu$m to 100 $\mu$m, preferably 5 $\mu$m to 75 $\mu$m, and for example, 10 $\mu$m to 60 $\mu$m, 10 $\mu$m to 50 $\mu$m, or 20 $\mu$m to 40 $\mu$m. Furthermore, there may be a case where a granular boron nitride that is contained in a boron nitride composition that is produced by the method of the present invention has an average grain diameter that is smaller or larger than such a range.

A spherical boron nitride that is contained in a boron nitride composition that can be produced by the method of the present invention has an average grain diameter within the above-described range; however, in one embodiment, the average grain diameter is preferably 10 $\mu$m or more, more preferably 20 $\mu$m or more, still more preferably 30 $\mu$m, and for

example, 40 μm or more.

The method for producing a boron nitride composition of the present invention is characterized by subjecting an iron boride composition containing an iron boride to a heating treatment in a nitrogen gas atmosphere for nitriding. Here, "iron boride" means a compound of boron and iron of which nitridation is possible (that is, a boron nitride can be generated) by a heating treatment under a nitrogen gas atmosphere, and is preferably FeB and/or $Fe_2B$ and particularly preferably $Fe_2B$, but is not limited thereto. The iron boride may be, for example, an iron boride such as $Fe_3B$ or $Fe_{3.5}B$.

In a case where the iron boride composition contains both FeB and $Fe_2B$, the mole-based ratio between FeB and $Fe_2B$ is 0:10 to 10:0, preferably 0:10 to 5:5, and for example, 0:10 to 3:7 (in the case of "zero", the iron boride composition substantially contains only one iron boride). As long as the object of the present invention is not substantially affected adversely, the iron boride composition may contain, in addition to the iron boride, another component (for example, moisture, an impurity that is accompanied by the iron boride, a raw material component that is used for synthesis in the case of synthesizing the iron boride, another reaction product, or the like).

The heating treatment for nitridation can be performed by heating the iron boride composition under a nitrogen gas atmosphere to synthesize a boron nitride. The pressure in the atmosphere is not particularly limited, and may be under reduced pressure to under increased pressure, and normally, the heating treatment may be performed at normal pressure. The heating is performed such that a temperature of 1750°C or higher and 2300°C or lower, preferably, a temperature of 2200°C or lower, and for example, 1800°C to 2100°C is maintained. At a heating temperature of lower than 1750°C, there may be a case where the amount of a boron nitride generated becomes insufficient, and at a heating temperature of higher than 2300°C, there may be a case where the iron boride is liquefied before a boron nitride is generated. The heating treatment for nitridation may be performed in a batch manner or in a continuous manner, and in another embodiment, the heating treatment may be performed in a semi-batch manner in which a nitrogen atmosphere is formed under a nitrogen flow.

The heating time may be ordinarily two to 20 hours, preferably three to 15 hours, and may be, for example, approximately five hours or approximately 10 hours depending on the heating temperature. When the iron boride composition is heated as described above, the iron boride that is contained in the iron boride composition reacts with nitrogen that is contained in the atmosphere, whereby a boron nitride composition can be obtained. In one preferable embodiment, it is possible to obtain a boron nitride composition containing a granular boron nitride that is generated by repeating the generation of a boron nitride by a reaction between the iron boride and nitrogen on the surface of the iron boride that is melted by heating and turns into liquid droplets. For a heating time of shorter than two hours, there may be a case where the amount of boron nitride generated becomes insufficient, and for a heating time of longer than 20 hours, there may be a case where an impurity is incorporated from an insulation material of a device for heating the iron boride composition.

After the heating treatment is performed for a predetermined time as described above, the iron boride composition is cooled to obtain a boron nitride composition. The iron boride composition may be cooled by any appropriate method, and for example, may be naturally cooled to room temperature. The boron nitride composition that is obtained is apparently (that is, macroscopically or visible to the eyes) a powder form and, more particularly, contains a granular boron nitride having a variety of steric structures and sizes. The boron nitride composition that is obtained may also contain, in addition to the granular boron nitride, which is the reaction product of the nitridation, an extremely small or amorphous boron nitride that has failed to turn into a granular boron nitride, among components that have been contained in the iron boride composition subjected to the nitridation by the heating treatment, a component that remains unreacted, an iron component that is generated by the reaction (for example, iron oxide, iron borate, iron nitride, iron carbide (in a case where carbon is contained in the iron boride composition), or the like), a component that does not participate in the reaction, or the like.

The iron boride composition can be nitrided by, for example, heating a heat-resistant container (for example, a boron nitride crucible) containing the iron boride under a nitrogen gas atmosphere to maintain the temperature of the iron boride at a predetermined temperature for a predetermined heating time. In one embodiment, the reaction may be performed under a nitrogen flow to react boron in the iron boride and nitrogen and to remove an impurity, a by-product during the nitridation (for example, CO, $CO_2$, an $O_2$ gas, or the like), or the like (in a case where these are present) to the outside of the system.

The granular boron nitride that is contained in the boron nitride composition that is obtained by the nitridation by such a heating treatment is a so-called "grain" form (that is, granular) and has a variety of steric structures. Specifically, such steric structures may be, for example, a plate shape, a polyhedral shape, a spherical shape, an ellipsoidal shape, a cylindrical shape, a conical shape, and one of parts thereof and, furthermore, may be a variety of combinations of these exemplified shapes. The boron nitride composition that is obtained may contain, in addition to the granular boron nitride from which such steric structures can be discriminated, a smaller granular boron nitride, that is, a powdery boron nitride that is too fine to easily discriminate the steric structure (for example, a boron nitride such as a seed of the granular boron nitride or a precursor thereof), and ordinarily, such a powdery boron nitride may be somewhat present.

In one embodiment, the granular boron nitride that is contained in the boron nitride composition produced by the method of the present invention is a plyrality of the granular boron nitrides, normally an aggregate of a large number of granular boron nitrides, and each of the granular boron nitrides has any of a variety of steric structures described above. Normally, each granular boron nitride has any one steric structure of a polyhedral shape, an ellipsoid, a spherical shape, a plate shape, and any one of a variety of combinations thereof. The steric structure that each granular boron nitride has can be observed with an electron microscope (for example, SEM, at a magnification of 2000 times), the kinds of the steric structures of the granular boron nitrides can be visually determined based on a micrograph, and it is possible to determine the proportions of grains having different steric structures present therein based on this. In the present specification, a granular boron nitride that is too small to easily discriminate the steric structure even with the above-mentioned observation with such magnification is referred to as a powdery boron nitride as described above. The grain diameters of such powdery grains are less than 1 $\mu$m.

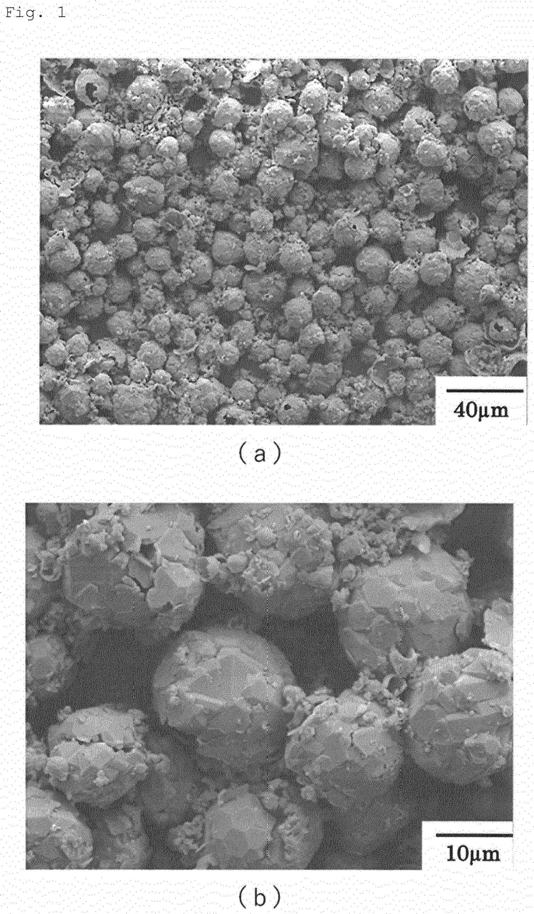

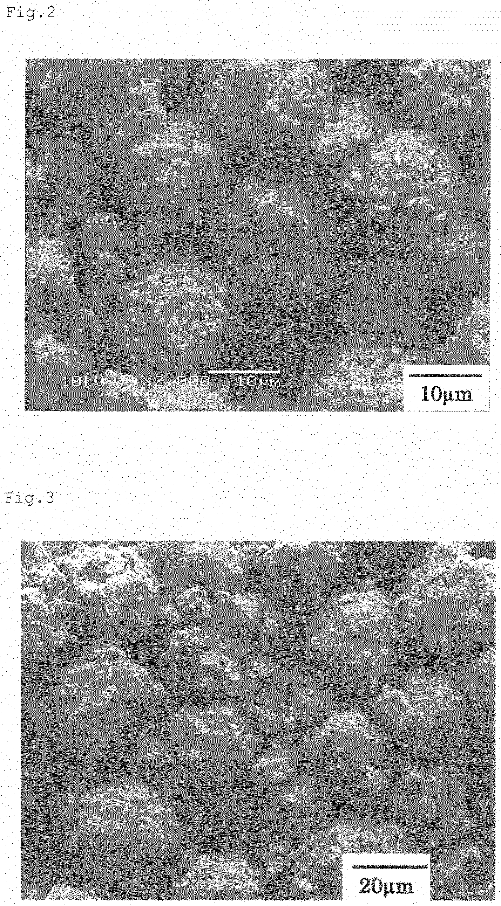

Examples of the SEM photographs of typical granular boron nitrides that are contained in the boron nitride compositions produced by the method of the present invention are shown in Figure 1, Figure 2, and Figure 3. These photographs are the photographs of the granular boron nitrides obtained in Example 1 (Figure 1), Example 7 (Figure 2), and Example 14 (Figure 3) described below, and it is found that the granular boron nitrides have a variety of steric structures and sizes. In Figure 1, a part of Figure 1(a) is enlarged and shown in Figure 1(b). When these are observed in detail, it is found that the granular boron nitrides have so-called grain shapes that seem to be integrally configured with walls each curved in an outwardly convex shape and have a substantially spherical steric structure as a whole. In Figure 3, it is also found that, in addition to the spherical boron nitride, a granular boron nitride having another steric structure, for example, a plate shape has been generated. As a result of analyzing the boron nitride composition obtained in Example 1 by X-ray diffraction, it was confirmed that a hexagonal boron nitride (h-NB) was generated and FeB, $Fe_2B$, $Fe_2O_3$, $Fe_3O_4$, and the like were contained in traces amounts as different components.

In one preferable embodiment, the granular boron nitride is a spherical boron nitride having a steric structure similar to a true sphere, which can also be understood from the SEM photographs. The degree of being similar to the true sphere can be evaluated using, for example, "sphericity" which will be described below, for granular boron nitrides that can be visually determined to have a shape similar to a spherical form (that is, a sphere-like shape) in the SEM photographs.

<Sphericity>

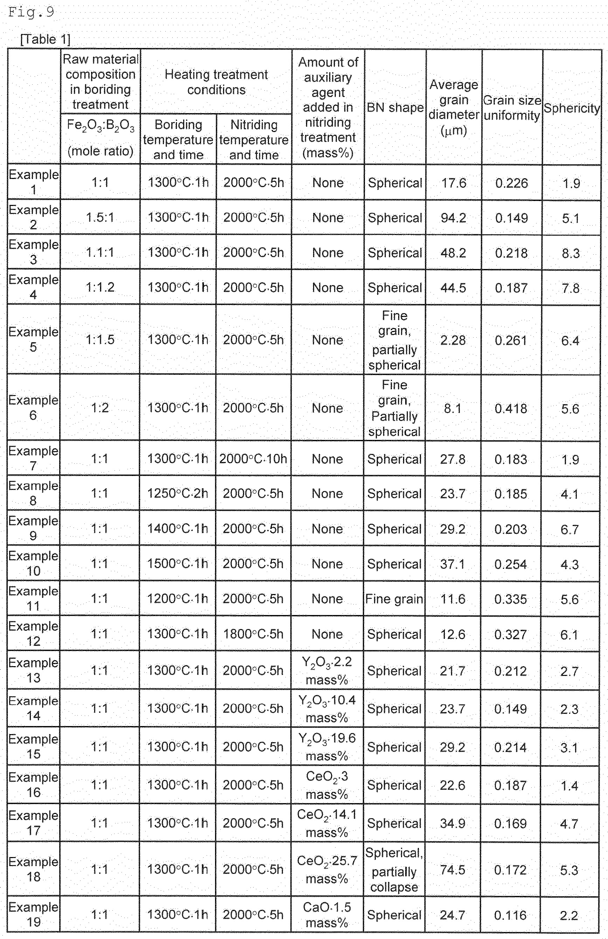

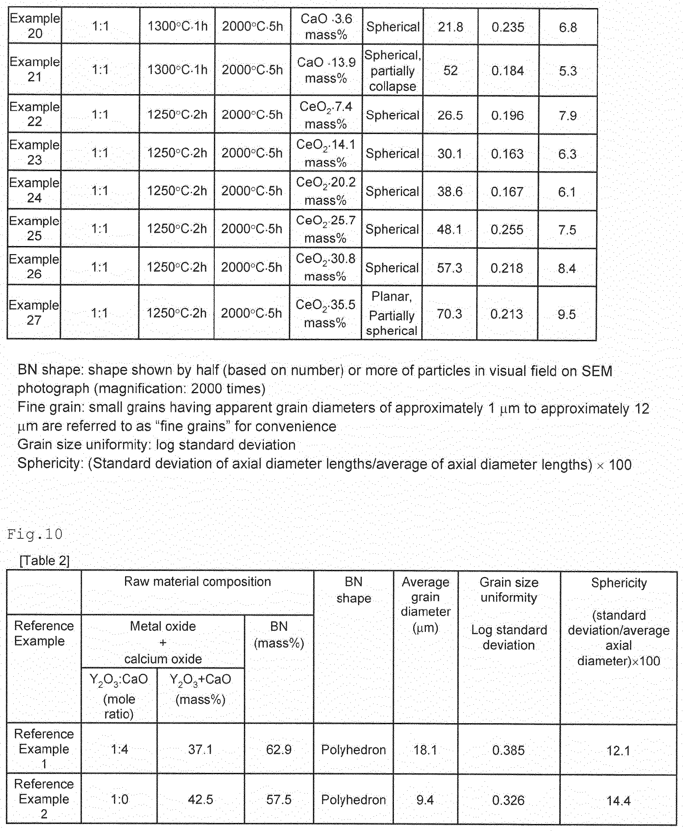

In a (two-dimensional) SEM cross-sectional photograph (magnification: 1000 to 3000 times depending on particle dimensions, normally, 2000 times) of a granular boron nitride in the cross-sectional observation in a thickness direction (in a vertical direction of a plane) of a disc-like resin composite material obtained by adding 45 parts by mass of the granular boron nitride, of which sphericity should be measured, to an epoxy resin material (55 parts by mass) and thermally curing the mixture without pressure, the longest diameter is selected as the major axis, the average value and standard deviation of the lengths of axes that pass through the central point of the major axis and are at an angle of 45°, 90°, and 135° with respect to a major axis, respectively, (that is, axial diameters when the major axis is rotated every 45° around the central point of the major axis as the center from the position of the major axis, that is, the lengths of the diameters) and the length of the axial diameter of the major axis (therefore, the lengths of four axial diameters) are obtained, and the ratio thereof (standard deviation/average axial diameter) $\times$ 100 is used as the sphericity in the present specification. As the numerical value of this sphericity becomes smaller, it means that the steric structure becomes more similar to the true sphere, and for example, in a case where the sphericity is zero, the steric structure may be regarded as substantially the true sphere. In the present specification, a spherical boron nitride means a boron nitride having a sphericity of 10 or less as described above. Sphericities shown in Table 1 of Figure 9 where the results of Examples to be described below are summarized were obtained by measuring all granular boron nitrides that were present in the visual field of the cross-sectional photograph.

The sphericity of the granular boron nitride that is contained in the boron nitride composition produced by the method of the present invention can also be near zero (for example, 0 < sphericity < 0.7) in some cases, but is normally 10 or less and, for example, 7 or less. There may be a case where the steric structure may be regarded as substantially the true sphere (for example, a case where the sphericity is 0.7 to 1.4 or the like). The sphericity is 0.7 to 10 in a preferable embodiment, 0.7 to 8 in a more preferable embodiment, and for example, 0.7 to 3. Boron nitrides having a sphericity within such ranges may be considered to have a substantially sphere-form steric structure. The sphericities were measured for the granular boron nitrides obtained in Example 17 and Comparative Example 5 described in Patent Literature 2 and found out to be approximately 12.1 and 14.4, respectively.

The granular boron nitride that is contained in the boron nitride composition produced by the method of the present invention can have a variety of grain diameters and also can have relatively large grain diameters depending on production conditions, which can also be understood from the photographs of Figure 1 to Figure 3. Specifically, in one embodiment, the granular boron nitride has relatively small grain diameters and can be grains that are too small to easily discriminate the steric structure thereof with a SEM photograph (at a magnification of 2000 times), that is, a powdery boron nitride as described above. In another embodiment, the granular boron nitride is of grains having grain diameters relatively large enough to easily discriminate the steric structure thereof, and in a preferable embodiment, the granular boron nitride can be spherical as described above. It is needless to say that there may be a case where the granular boron nitride contains both the powdery boron nitride and the larger granular boron nitride. The average grain diameter of the granular boron nitride is normally 2 $\mu$m to 75 $\mu$m, and for example, 2.5 $\mu$m to 60 $\mu$m, and in a preferable embodiment, the average grain diameter is 10 $\mu$m to 50 $\mu$m, and for example, 20 $\mu$m to 40 $\mu$m. There may be a case where the granular boron nitride that is contained in the boron nitride composition produced by the method of the present invention can have an average grain diameter that is smaller or larger than such a range.

<Average grain diameter, Log average grain diameter, and Log standard deviation>

A granular boron nitride of which average grain diameter should be measured (an aggregate of individual granular boron nitrides having a variety of grain diameters) is prepared by performing a pretreatment as described below on the boron nitride composition that is obtained by cooling after the nitridation with the heating treatment by the method of the present invention.

A sample of 0.02 to 0.04 g was randomly collected from the boron nitride composition synthesized by the nitridation of the iron boride composition followed by acid-washing, filtering, and drying, put into soapy water (a mixture of 1 g of a liquid kitchen detergent (KITCHEN FRESH, manufactured by Sankyo Yushi Co., Ltd.) with 500 ml of pure water) of 20 ml as a dispersion medium, and stirred with an ultrasonic cleaner (model name: manufactured by NSD, ultrasonic cleaner US-5) for five minutes to disperse the granular boron nitride that was contained in the sample. After that, the average grain diameter was measured of the granular boron nitride using a laser diffraction grain size distribution analyzer (SHIMADZU CORPORATION: SALD-2300) while irradiating with ultrasonic waves in a flow cell.

More particularly, grain diameter sections were by dividing a logarithmic scale of grain diameters of 0.01 to 1000 $\mu$m as the horizontal axis into 50 equal length sections, and volume-based relative particle amounts corresponding to the grain diameter sections were indicated along the vertical axis. When the respective grain diameter sections are indicated by $[X_j, X_{j+1}]$ ($j = 1, 2, \cdots\cdots, 50$), representative grain diameters in the respective grain diameter sections can be calculated with the following formula (Math 1) based on the logarithmic scale:

[Math 1]

$$\frac{\log_{10} X_j + \log_{10} X_{j+1}}{2}$$

At this moment, the unit for the grain diameters is not a unit for the typical grain diameters, while being called grain diameters, since the grain diameters are of logarithm. Furthermore, when $q_j$ ($j = 1, 2, \cdots\cdots, 50$) represent the relative particle amounts (difference %) corresponding to the particle diameter sections $[X_j, X_{j+1}]$, and the total of all of the sections is 100%, the average value $\mu$ (Log average grain diameter) on the logarithmic scale can be calculated with the following formula (Math 2):

[Math 2]

$$\mu = \frac{1}{100} \sum_{j=1}^{n} q_j \left( \frac{\log_{10} X_j + \log_{10} X_{j+1}}{2} \right)$$

This $\mu$ is a numerical value with respect to the logarithmic scale, and does not have a unit for particle diameters, and $10^\mu$, that is, 10 to the $\mu$ power leads to the average grain diameter. In addition, the standard deviation regarding these average grain diameters can be obtained in the following manner. Based on $\mu$ that expresses the average grain diameter with regard to the logarithmic scale, the standard deviation similarly defined on the logarithmic scale can be calculated as shown in the following formula (Math 3), and this $\sigma$ is defined as the Log standard deviation (or Log grain diameter standard deviation):

[Math 3]

$$\sigma = \sqrt{\left\{\frac{1}{100}\sum_{j=1}^{n} q_j \left(\frac{\log_{10} x_j + \log_{10} x_{j+1}}{2}\right)^2\right\} - \mu^2}$$

Regarding such Log average grain diameter and Log standard deviation, the following internet information can be referred to:

https://www.an.shimadzu.co.jp/powder/lecture/practic e/p01/lesson19.htm
https://www.an.shimadzu.co.jp/powder/lecture/practic e/p01/lesson20.htm

The average grain diameter that is mentioned in the present specification is a numerical value that is obtained by this measurement method regardless of the aggregation state of the particles, and can also be an average particle diameter of primary particles or an average particle diameter of secondary particles depending on the properties or status of the particles. Depending on the situation, the average grain diameter is one that is measured in a state where both primary particles and secondary particles are present in a mixed manner. In addition, the Log standard deviation obtained as described above is defined as an index of the degree of spread of the grain size distribution (which is also simply referred to as "spread index" or "grain size uniformity"). That is, it means that, as the numerical value of this spread index becomes smaller, the variation in the grain diameter becomes smaller, that is, the grain size distribution becomes sharper (the grain diameters become similar).

In one preferable embodiment, the granular boron nitride that is contained in the boron nitride composition produced by the method of the present invention has relatively similar grain diameters (or sizes), which can also be understood from the SEM photograph of Figure 1. The spread index of the granular boron nitride that is contained in the boron nitride composition obtained by the method of the present invention is 0.3 or less in a preferable embodiment, 0.2 or less in a more preferable embodiment, and for example, within a range of 0.1 to 0.18 for the granular boron nitride that is obtained by the nitridation followed the acid washing, which will be described below.

In the nitridation by the heating treatment of the present invention, in one preferable embodiment, the iron boride composition contains, in addition to the iron boride, at least one auxiliary agent selected from rare earth oxides and alkaline earth metal oxides. Oxides that are preferable as the auxiliary agent is, for example, $Y_2O_3$, $CeO_2$, $La_2O_3$, CaO, and MgO. As one possible thought, it is assumed that when such an auxiliary agent are used, oxygen that is contained in the auxiliary agent substantially lowers the melting point of the iron boride, so that the iron boride is assisted to rapidly melt and form liquid droplets, as a result of which, the liquid droplet from iron boride is capable of rapidly reacting with nitrogen that is contained in the atmosphere, whereby the generation of a boron nitride can be accelerated. This assumption does not restrict the present invention by any means.

When the nitridation by the heating treatment is performed with mixing such an auxiliary agent with the iron boride composition, a granular boron nitride to be generated can have larger grain diameters compared with those in a case where the auxiliary agent is not mixed. While also depending on the operation conditions, when the results of Examples to be described below are taken into account, the average grain diameter of the granular boron nitride that is obtained by nitriding the iron boride composition with which the auxiliary agent is mixed increases by preferably approximately 20% to 100%, more preferably approximately 50% to 200%, and for example, 30% to 250% compared with the average grain diameter of the granular boron nitride that is obtained by nitriding the iron boride composition with which the auxiliary agent is not mixed. For example, as described below, the average grain diameter of 17.6 μm in Example 1 reached 34.9 μm in Example 17 and increased by approximately 100%. In addition, in Example 26 (the heating treatment temperature for boridation is slightly different a little), the average grain diameter became 57.3 μm and increased by approximately not smaller than 200%.

With the assumption that iron that is contained in the iron boride contained in the iron boride composition is all present in the iron monoboride (FeB) form, the amount of the auxiliary agent that is mixed with the iron boride composition is preferably 0.5 mass% to 36 mass%, more preferably 1.4 mass% to 21 mass%, and for example, 1.4 mass% to 15 mass% being expressed as a ratio (mass%) of the mass of the auxiliary agent that is mixed with the iron boride composition to the mass of the boron nitride that is generated in a case where boron that is contained in the iron monoboride is assumed to fully convert into boron nitride. When the amount of the auxiliary agent mixed is smaller than the lower limit of such a range, the effect of mixing the auxiliary agent can be insufficient, and the growth of crystals cannot be sufficiently accelerated. In addition, when the amount of the auxiliary agent mixed is larger than the upper limit of such a range, the growth of crystals is accelerated, but excessively grown grains collapse, and a granular boron nitride in a plate-like form can also be generated. The auxiliary agents such as rare earth oxides and alkaline earth metal oxides increase the grain diameters of the granular iron boride before nitridation and turn into oxides after the boron nitride is formed, but these can be removed by washing as described above or below.

When the results of Examples to be described below are taken into account, a particularly preferable auxiliary agent is $Y_2O_3$, $CeO_2$, and CaO, and the amounts of these auxiliary agents mixed are preferably 0.8 mass% to 20 mass%, 1.2 mass% to 31 mass%, and 0.5 mass% to 14 mass%, and more preferably 1.0 mass% to 11 mass%, 1.5 mass% to 26 mass%, and 0.7 mass% to 8 mass%, respectively. When the auxiliary agent is mixed as described above, the average grain diameter of the granular boron nitride that is contained in the boron nitride composition produced by the method of the present invention can be 20 $\mu$m or more and preferably 30 $\mu$m or more. The upper limit of the average grain diameter is normally 100 $\mu$m and, for example, 80 $\mu$m based on the results of Examples to be described below.

In one preferable embodiment of the present invention, an iron boride composition that is obtained by subjecting a raw material mixture containing an iron oxide component, a boron oxide component, and carbon to a heating treatment (that is, by boriding iron in the iron oxide component) under an inert gas atmosphere is used as the iron boride composition that should be subjected to the heating treatment at the time of the nitridation.

The iron oxide component that is used for the boridation by this heating treatment contains at least one selected from $Fe_2O_3$, $Fe_3O_4$, and FeO as the iron oxide. In addition, the boron oxide component that is used for the boridation of the iron oxide (more particularly, the boridation of the iron in the iron oxide) contains at least one selected from $B_2O_3$, $B_4O_3$, and $B_4O_5$ as the boron oxide. Iron that is contained in the iron oxide component and boron that is contained in the boron oxide component are preferably used in mole-based equimolar amounts or amounts similar thereto. Specifically, the mole-based ratio between iron element (Fe) derived from the iron oxide used and boron element (B) derived from the boron oxide used is 1:2 to 1.5:1, preferably 1:1.2 to 1.2:1, and for example, approximately 1:1 (Fe:B). In a particularly preferable embodiment, for example, $Fe_2O_3$ is used as the iron oxide, and $B_2O_3$ is used as the boron oxide; however, regarding the iron oxide and the boron oxide, the boridation by the heating treatment may be performed using other compounds and different combinations thereof as long as an iron boride composition can be obtained from the iron boride and the boron oxide.

As the carbon, it is possible to use carbon black, graphite, and carbon precursors that can serve as a carbon source at high temperatures, but carbon black is suitable from the viewpoint of ease of procurement or the like. As the carbon black, one obtained by a furnace method, a channel method, or the like, acetylene black, and the like can be used. The average particle diameters (volume-based average particle diameters) of these carbon blacks are arbitrary and are, for example, 0.01 $\mu$m to 5 $\mu$m and preferably 0.01 $\mu$m to 1 $\mu$m.

In addition, a carbon precursor may be used instead of or in addition to the above-described carbon. For example, synthetic resin condensates such as a phenol resin, a melamine resin, an epoxy resin, and a furan phenol resin, hydrocarbon compounds such as pitch and tar, and organic compounds such as cellulose, sucrose, polyvinylidene chloride, and polyphenylene can be used as the precursor. Among these, in particular, precursors containing a small amount of a metal impurity such as a phenol resin, cellulose, or polyphenylene or the like are preferable. One of these may be used singly, or two or more thereof may be mixed together and used.

In one embodiment, the amount of carbon (in a case where the carbon precursor is used, the amount of carbon that is generated therefrom) is preferably an amount stoichiometrically necessary for converting all oxygen derived from the iron oxide and the boron oxide into carbon monoxide (it is needless to say that even when the stoichiometric amount of carbon is used, it is not always possible to convert all oxygen into carbon monoxide). In another embodiment, the amount of carbon may be larger or smaller than such an amount. In the case of a smaller amount, the iron oxide and/or the boron oxide remains after the boridation, but there is no problem as long as the remaining oxide does not adversely affect the following nitridation by the heating treatment. In a case where the amount of carbon is large, carbon remains; however, similarly, there is no problem as long as the remaining carbon does not adversely affect the nitridation.

The boridation is preferably performed under an inert gas atmosphere and may be performed under an inert gas flow to remove a disused reaction product such as carbon monoxide that is contained in a gas phase. As the inert gas, for example, argon, nitrogen, and the like can be used, and argon is preferably used. The boridation by the heating treatment may also be performed at any appropriate pressure. Therefore, the boridation may be performed under reduced pressure or under increased pressure, but may be ordinarily performed at normal pressure.

The heating treatment in the boridation is performed at a temperature at which the iron oxide and the boron oxide react together to generate an iron boride (therefore, iron is borided); however, when practicality is taken into account, the heating treatment is performed such that a temperature of 1150°C or higher and 1600°C or lower, preferably 1200°C to 1350°C, is maintained. In a case where the heating temperature is lower than 1150°C, there may be a case where the amount of the iron boride generated is small, and in a case where the heating temperature is higher than 1600°C, there may be a case where the grain diameters of the iron boride become too large.

The heating time may be ordinarily 0.5 to three hours and is preferably one to two hours depending on the heating temperature. After the heating treatment is performed for a predetermined time, the iron boride composition containing the iron boride is obtained after cooling when necessary. The cooling may be performed by any appropriate method, and for example, the cooling may be performed by naturally cooling to room temperature. In a case where the heating time is shorter than 0.5 hours, there may be a case where the amount of the iron boride generated is small, and in a case where the heating time is longer than three hours, there may be a case where the grain diameters of the iron boride become too large.

The above-described boridation makes it possible to obtain the iron boride composition containing the iron boride. This composition contains, similar to the above-described granular boron nitride, a powdery iron boride (having a grain diameter of, for example, less than 1 $\mu$m) to an iron boride having a somewhat large grain diameter (for example, a grain diameter of more than 20 $\mu$m). The iron boride composition may contain, for example, an aggregate of the granular iron borides having a variety of grain diameters within a range of 3 $\mu$m to 10 $\mu$m.

In the boridation by the heating treatment, the iron oxide, the boron oxide, and the carbon that are contained in the raw material mixture are not fully consumed, and at least one component depending on the reaction conditions, normally, all of the components can be contained in the iron boride composition as other components other than the iron boride. Such other components can be present to an extent that the following nitridation by the heating treatment is not substantially affected. In one embodiment, with the assumption that FeB is stoichiometrically generated as the iron boride by the boridation, the amounts of the iron oxide and the boron oxide are selected such that an iron element and a boron element that are contained in these oxides become equimolar, an amount of carbon that is stoichiometrically necessary to convert oxygen that is contained in these oxides into carbon monoxide is selected, and boriding is performed using the iron oxide, the boron oxide, and the carbon as the raw material mixture. At this time, an iron boride composition to be obtained may also contain the above-described other components. Even when nitriding using the iron boride composition to be obtained as it is, it is possible to obtain a boron nitride composition containing a granular boron nitride with no substantial influences.

In a case where the iron boride composition contains carbon, the granular boron nitride that is generated by the nitridation or the boron nitride composition containing the granular boron nitride may contain carbon. In a case where the carbon being contained becomes a problem (for example, a case where conductivity arising from the presence of carbon becomes a problem) depending on the use of the granular boron nitride or the boron nitride composition containing the granular boron nitride, it is preferable to perform the heating treatment for the boridation using a raw material mixture containing a minimal amount of carbon so that the amount of carbon that remains in the iron boride composition is minimized.

The boridation by the heating treatment is performed under an inert gas atmosphere. The inert gas atmosphere is, for example, an atmosphere containing one or two or more of a nitrogen gas, a helium gas, an argon gas, and the like and particularly preferably an argon gas atmosphere. In the present specification, the inert gas atmosphere may be in a so-called vacuum state or reduced pressure state where a gas is substantially not contained or rarely contained.

The boriding performed as described above generates an iron boride composition containing an iron boride, and this iron boride composition can be used for the nitridation. The iron boride that is contained in the iron boride composition normally contains FeB and Fe$_2$B, can further contain Fe$_3$B depending on the situation, and may further contain an unreacted iron oxide and/or boron oxide and carbon, which can be used as the iron boride composition as it is for the above-described nitridation by the heating treatment.

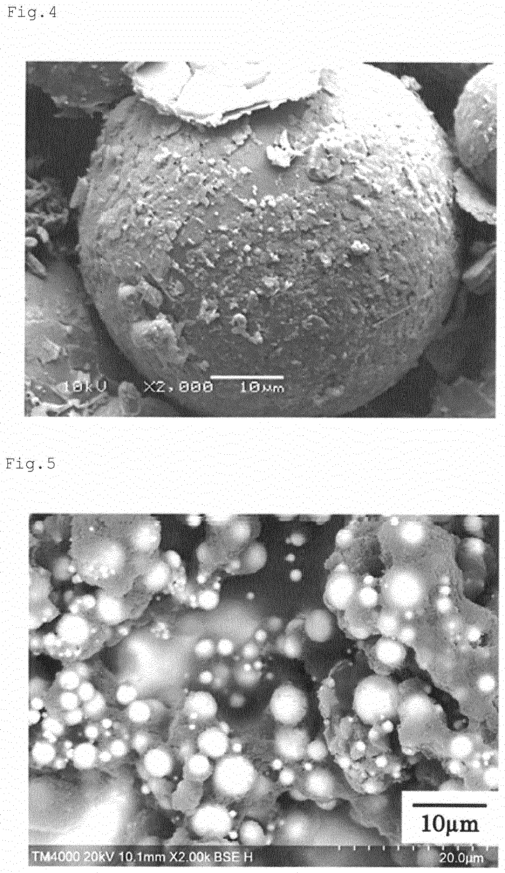

In one preferable embodiment, Be$_2$O$_3$ as the boron oxide and Fe$_2$O$_3$ as the iron oxide are used in a mole ratio of 1:1, a stoichiometric amount of carbon is added thereto as described above, and these are subjected to the heating treatment for the boridation (for example, 1500°C for one hour). The iron boride composition that is obtained by this boridation by the heating treatment mainly contains FeB and Fe$_2$B (mole ratio of approximately 95:5) as the iron boride and can further contain unreacted Be$_2$O$_3$, Fe$_2$O$_3$, and carbon. The iron boride composition to be obtained may be temporarily cooled to, for example, room temperature to facilitate handling in the following nitridation. A microphotograph of an iron boride composition obtained in Example 10 (boriding conditions: 1500°C for one hour), which will be described below, is shown in Figure 4. A granular iron boride having a variety of grain diameters is present, which can be easily understood. As a result of analyzing the iron boride composition obtained in Example 10 by X-ray diffraction, it was confirmed that FeB was generated as a main component, and additionally, a small amount, normally, a trace amount of Fe$_2$B was generated.

In one embodiment of the present invention, such an iron boride composition is subsequently subjected to the nitridation by the heating treatment described above. The nitridation is performed by heating the obtained iron boride composition at, for example, 2000°C for five hours, and a boron nitride composition containing a granular boron nitride can be obtained by this nitridation with the heating treatment. In another embodiment, in a case where boridation is performed under a nitrogen atmosphere to obtain an iron boride composition, a boron nitride composition can be obtained by heating the obtained iron boride composition up to a temperature necessary for the nitridation without cooling the iron boride composition.

It is preferable that, prior to the nitridation by the heating treatment, the cooled iron boride composition is subjected to a crushing treatment to make large granular iron boride grains that are contained in the iron boride composition fine, and in the case of the iron boride composition being in an aggregation state, the granular iron boride grains are disintegrated, so that the granular iron boride has a sharp grain size distribution. Specifically, the crushing treatment may be performed using, for example, an automatic mortar so that granular iron borides having grain diameters of, for example, more than 20 μm are substantially not present. In one embodiment, the granular iron boride may be crushed so that the volume-based average grain diameter reaches 9 μm or less and D90 reaches 15 μm or less. When the granular iron boride that is obtained by such a crushing treatment is made to have a sharper grain size distribution, it is considered that in the nitridation of the iron boride composition, the iron boride uniformly melts and turns into liquid droplets, as a result of which, a nitriding reaction proceeds more uniformly, so that a boron nitride composition can be obtained which contains a granular boron nitride having a sharp grain size distribution can be obtained.

In the method for producing the boron nitride composition of the present invention, when the iron boride composition is subjected to a heating treatment under a nitrogen atmosphere, the iron boride preferentially melts to form liquid droplets, and the liquid droplets join with their surrounding liquid droplets by energy that is applied by heating and become larger liquid droplets. The iron boride that is present on the surfaces of such liquid droplets reacts with nitrogen in the atmosphere, and a boron nitride is generated on the surfaces of the liquid droplets (normally, a large number of various places on the liquid droplet surfaces). By repeating this reaction, the boron nitride is generated and grows along the surfaces of the liquid droplets, and this becomes a curved layer-like portion along the surface shapes of the liquid droplets. The curved layer-like portions growing as described above are generated and grow at a variety of places on the liquid droplet surfaces, bond to other curved layer-like portions to be integrated, furthermore, the curved layer-like portions grow inward and outward and/or bond to other curved layer-like portions, and finally become the granular, preferably, spherical boron nitride of the present invention having a wall with a certain degree of thickness, preferably, having a form of being surrounded by a relatively thick wall, that is, having a shell structure of boron nitride crystals.

Therefore, inside the granular boron nitride, a variety of components that are contained in the iron boride composition, for example, an unreacted iron boride and an iron component as a by-product of the nitriding reaction (for example, an iron oxide, iron borate, iron oxide, or the like) can remain and be contained as a content in the shell. Depending on the situation (for example, depending on the origin of the iron boride composition that is used in the nitridation), a small amount of an iron oxide, a boron oxide, carbon, an iron carbide, or the like can also be contained as a content in the shell. As described below, such contents can be dissolved in a liquid and removed by washing the granular boron nitride using a liquid that dissolves the contents, for example, an acid. Since the spherical shell has gap-like portions and/or hole-like portions that are formed by the joining curved layer-like portions and are present between the curved layer-like portions (and thus becomes porous), it is assumed that such washing is possible.

As described above, the granular boron nitride that is contained in the boron nitride composition of the present invention is formed of the boron nitride in a wall form of the curved layer-like portion, is a hexagonal boron nitride, has at least a certain degree of thickness, and thereby can have a strong shell structure. This shell structure has a macroscopically round form as a whole of all particles, that is, is granular. In the strict sense, the shell structure can be a so-called spherical shape, ellipsoidal shape or polyhedral shape, and ordinarily has a shape of a variety of combinations thereof. In a preferable embodiment, the above-described sphericity of the granular boron nitride that can be obtained by the method for producing the boron nitride composition of the present invention is extremely small. The granular boron nitride has a shell structure that is further closer to the true sphere even when compared with well-known granular boron nitrides that are mentioned to have a relatively small aspect ratio (for example, a granular boron nitride disclosed in Patent Literature 2).

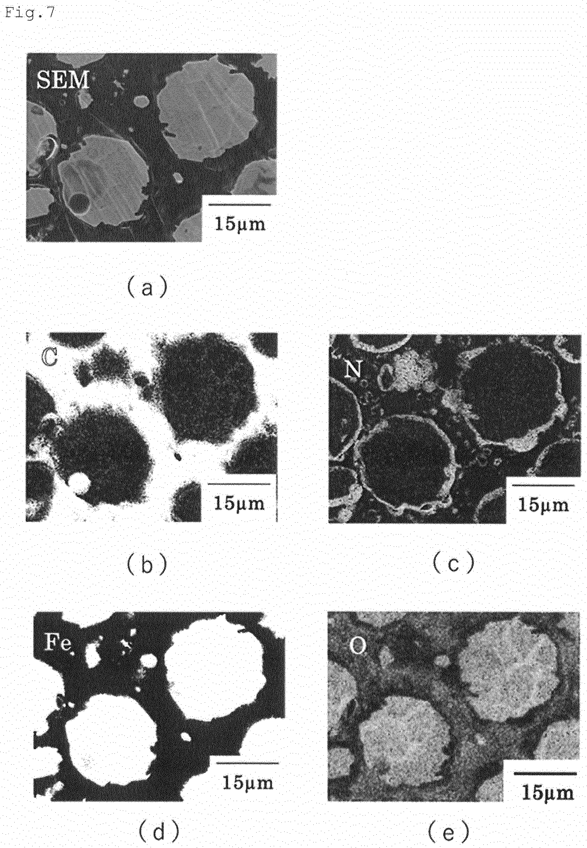

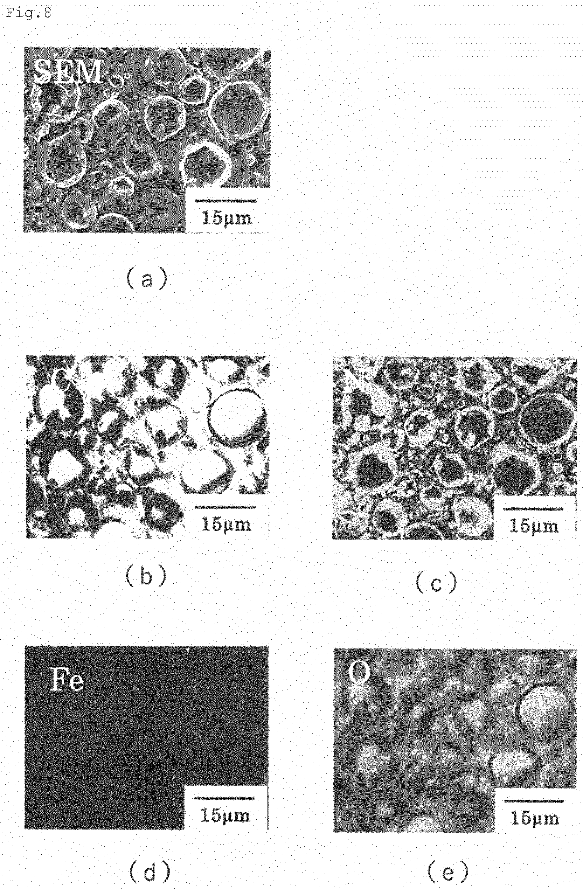

An example of a SEM photograph of a typical granular boron nitride of the present invention is shown in Figure 7(a). This photograph is a SEM photograph of a cross section of a test piece formed by mixing the granular boron nitride (before acid washing) obtained in Example 1 which will be described below, with an epoxy resin and curing the mixture for observation (therefore, a sliced state of the granular boron nitride). When this is observed in detail, it is found that curved surface portions integrally join together and configure a granular boron nitride having a substantially spherical steric structure. A SEM photograph was also captured regarding the granular boron nitride of the present invention(a granular boron nitride obtained in Example 1 to be described below) in a state where the contents, such as an oxide, in the shell were removed by acid washing which will be described below. That photograph is shown in Figure 8(a). As is clear by the comparison of both photographs, there was no substantial difference in the grain diameters of the spherical BN particles before and after the removal of the oxide or the like. As a possible description thereof, it is considered that a liquid-phase component that is generated at the time of the nitridation by the heat treatment remains in the granular boron nitride having the shell structure, but the liquid-phase component is removed by acid washing.

EDS photographs corresponding to the SEM photographs of Figure 7(a) and Figure 8(a) of the spherical boron nitride of the present invention are shown in Figure 7(b) to Figure 7(e) and Figure 8(b) to Figure 8(e). These show the results of performing mapping analysis on the granular boron nitrides in the states of the SEM photographs of Figure 7(a) and Figure 8(a) regarding a C element (photograph (b)), an N element (photograph (c)), an Fe element (photograph (d)), and an O element (photograph (e)) using EDS (energy dispersive X-ray spectroscopy). The clarities of these SEM photographs are not necessarily sufficient since the photographs are obtained by converting the original color mapping photographs into grayscale photographs; however, in the EDS photographs, the relatively white portions are those where the target elements are present.

When Figure 7(c) is referred to, nitrogen elements are present in the white annular portions around the black round portions. From this fact, it is found that the boron nitride is present around the round portions, that is, in a circumference-like form, that is, has a shell structure. When Figure 7(d) and 7(e) are referred to, it is found that iron elements and oxygen elements are present inside the white round portions. These are iron oxides that are contained in the iron boride composition, which is the raw material for the nitridation by the heating treatment, and iron components or the like that are generated during the synthesis of the boron nitride (for example, iron oxide, iron borate, iron nitride, and iron carbide), and these are contained as the contents of the shell structure. When Figure 7(b) is referred to, it is found that the outsides of the round portions are white and a carbon elements are present in these portions. They are derived from the epoxy resin used for making the test pieces.

When Figure 8(c) is referred to, nitrogen elements are present around the round portions, but are not present inside the round portions. When Figure 8(d) is referred to, the entire image is substantially dark black in the photograph, and no iron elements are present. When Figure 8(e) is referred to, oxygen elements are present inside the round portions. When these are taken into account, it is considered that the iron oxide and the like, which were the contents of the shell structure of the granular boron nitride, have been removed by washing, and oxygen derived from the epoxy resin that has entered the shell structure during the formation of the test pieces is present.

As described above, the shell is formed, but the granular boron nitride of the present invention contains, as its content, a component that has been solidified in the shell in the end of the cooling after the nitridation by the heating treatment. This content is a component that is contained in the iron boride composition, which is a raw material used for the nitridation, and can be a component that has not been consumed during the reaction by which the boron nitride is generated (for example, $FeB$, $Fe_2B$, $Fe_2O_3$, $B_2O_3$, or the like) or iron or an iron compound (for example, $Fe_2O_3$, $Fe_3O_4$, or the like) generated during the formation of the boron nitride. In a case where an oxide is added as an auxiliary agent during the nitridation, such an oxide can also be contained in the content. Such a content can be substantially removed by a washing treatment, which will be described below, for example, an acid treatment. After that, the granular boron nitride of the present invention is dried, whereby the inside of the shell structure of the granular boron nitride can be in a substantially hollow state.

The amount of the content in the shell structure can be decreased by, for example, the acid treatment. Specifically, the content in the shell structure (particularly, the oxide) is reacted with an acid using an acid aqueous solution, converted into a water-soluble salt, dissolved in water, and removed, whereby the amount thereof can be decreased. For example, in a case where the granular boron nitride is used as a thermal conductive filler, since the thermal conductivity of an oxide is normally small, it is preferable that the amount of the oxide that is contained in the granular boron nitride is decreased to an extent that the thermal conductivity is not substantially affected adversely by the oxide. In addition, in the content, there may be a semi-conductive substance, for example, $Fe_2B$ or $Fe_2O_3$, and in a case where the granular boron nitride containing such a content is mixed with a plastic resin to produce a formed body, there may be a case where the voltage resistance of the formed body becomes insufficient. Therefore, there are cases where it is preferable to remove the content in the shell structure depending on the use of the granular boron nitride. For example, the acid washing is performed so that the amount of the content contained in the granular boron nitride reaches, for example, 0.1% to 80%, preferably 1% to 70%, more preferably 2% to 60%, and for example, 10% to 53% based on the mass of the entire composition (containing the content).

Therefore, the present invention also provide the granular boron nitride that is contained in the boron nitride composition and has the shell structure containing the content therein. This granular boron nitride can be obtained by a method for producing the granular boron nitride composition characterized in that a granular boron nitride can be obtained from the boron nitride composition by any appropriate treatment (for example, the removal of a powdery boron nitride by a classification treatment such as sieving and/or the extraction of granules having grain diameters within a predetermined range). Furthermore, the present invention also provides another granular boron nitride which is obtained by removing at least a part, preferably a majority, and more preferably substantially all of the content in the shell structure of the granular boron nitride and in which at least a part of the inside, preferably, substantially all of the inside of the shell structure is vacant. The removal of the content in the shell structure may be performed by any appropriate method other than acid washing as long as the properties of the granular boron nitride as a filler are not excessively affected. The acid washing is advantageously capable of substantially removing the oxide without adversely affecting the granular boron nitride. Such another granular boron nitride can be obtained by the method for producing the granular boron nitride characterized in that the granular boron nitride or the boron nitride composition is acid-washed.

The present invention provides a resin composition containing the granular boron nitride in which the amount of the content in the shell structure has been decreased by, preferably, washing as described above, particularly the granular boron nitride having a substantially hollow shell structure therein, and a resin material. The content of the granular boron nitride in the resin composition is preferably 10% to 90%, more preferably 15% to 88%, for example, 30% to 85%, and particularly 50% to 82% based on the mass of the entire resin composition. When these ranges are expressed as volume ratios, while being somewhat different depending on the apparent density of the granules, as one example, the ranges correspond to approximately 5 to 80 vol%, approximately 10 to 70 vol%, and approximately 15 to 50 vol%, respectively. When the amount of the granular boron nitride is too small, there can be a case where the probability of the granular boron nitride being present in contact therewith decreases, which leas to insufficient thermal conduction. Conversely, when the amount of the granular boron nitride is too large, there can be a case where the amount of the resin material as a matrix becomes excessively small and the strength or voltage resistance as a formed body is adversely affected. In addition, in another embodiment, the resin composition may contain a boron nitride composition containing the granular boron nitride of the present invention instead of the above-described granular boron nitride in the same ratio.

<Washing of boron nitride composition (production of granular boron nitride)>

The granular boron nitride that is contained in the boron nitride composition of the present invention, which is obtained by nitriding in the above-described manner, has the shell structure and contains the content as described above therein. In a case where the content has a smaller thermal conductivity than the boron nitride, in one preferable embodiment, the thermal conductivity of the granular boron nitride can be improved by decreasing the amount of the content. For example, in a case where a resin composition is produced using the granular boron nitride as a conductive filler that is mixed with a resin material, the resin material can be present not only between the particles of boron nitride but also in the shell structure of the particles. In this case, when the thermal conductivity of the content is smaller than the thermal conductivity of the resin material, decreasing the amount of the content in the shell structure in advance makes the resin material occupation increased by the decreased amount, so that the overall thermal conductivity of the resin composition improves.

In addition, a semi-conductive substance (for example, $Fe_2B$, $Fe_2O_3$, or the like) may be contained as the content, and there is a case where it is desirable to remove the semi-conductive substance. Therefore, when necessary, the content in the shell structure may be removed from the granular boron nitride in the boron nitride composition that is obtained by the method of the present invention. This removal can be performed by washing the granular boron nitride or the boron nitride composition containing the granular boron nitride with an acid, for example, an acid aqueous solution under heating as necessary. More particularly, a salt aqueous solution can be obtained by dissolving a salt in existing water using a reaction of converting a metal element that is contained in the content into a water-soluble salt corresponding to a metal element using the acid aqueous solution, and the content can be removed by removing this salt aqueous solution. Examples of the acid being used include organic acids and inorganic acids, and for example, chloric acid, nitric acid, sulfuric acid, or the like may be used.

This washing with the acid can be performed by dispersing the boron nitride composition in the acid aqueous solution under stirring. After that, the granular boron nitride is filtered out from the dispersion, and the granular boron nitride obtained is further washed with water to remove the residual acid and dried, whereby the granular boron nitride can be obtained. The total amount of the content remaining in the shell structure that is contained in this obtained granular boron nitride is preferably 0.1% to 30%, preferably 1% to 15%, and more preferably 3% to 10% based on the mass of the obtained granular boron nitride (containing the content). The amount of the content remaining in the shell structure can be easily adjusted by appropriately selecting a washing condition (for example, the concentration of the acid, the amount of the aqueous solution that is used for the washing, the number of times of washing, and/or the like), and it is also possible to set the lower limit value of the above-described range to the detection limit of the analysis means (for example, elemental analysis, XRD, or the like) or less (therefore, "0.0").

A granular boron nitride (aggregate) having a predetermined grain diameter or more can be obtained by removing (that is, classifying), for example, a granular boron nitride that is smaller than the predetermined grain diameter (for example, a powdery boron nitride), and a solid content other than other fine boron nitrides (in the case of being present), or the like depending on the opening size, the retention particle diameter, the separation ability, or the like of a filter medium being used at the time of filtering, . In addition, a granular boron nitride (aggregate) having a predetermined grain size distribution width can be obtained by combining filtering using filter media having other opening sizes or the like.

The amount of the content (for example, an iron oxide) of the granular boron nitride can be measured as described below:

One gram of the acid-washed granular boron nitride is added to 60 g of a 1N hydrochloric acid aqueous solution in a TEFLON-lined pressure-resistant container, the container is sealed, and subjected to a heating treatment at 100°C for 11 hours. A slurry being obtained is filtered with a membrane filter, the concentration of, for example, an iron element is analyzed as to a solution obtained by diluting the filtrate 200 times with pure water using an ICP (ion inductively coupled plasma) emission spectrometer (manufactured by SHIMADZU CORPORATION, ICPS-7510), and the amount of the iron oxide (for example, $Fe_2O_3$) that is contained in the granular boron nitride is calculated based on the concentration. In addition, the absence of the peak of the iron oxide is confirmed by performing XRD analysis on the filter cake.

The fact that the particles being filtered out are a granular boron nitride (h-BN) was confirmed from an X-ray diffraction pattern. In addition, an observation result of boron nitride crystals being granular, in a preferable embodiment, substantially spherical was obtained with a SEM. The granular boron nitride having a shell structure was investigated using a SEM observation sample produced by etching a substance with an argon ion beam which is obtained by adding the granular boron nitride to an epoxy resin and curing the granular boron nitride. In a case where the granular boron nitride is sliced by etching, the fact that stacking of the c-plane of boron nitride is connected in a circle, form so that a shell is formed, and substances other than boron nitride are present therein can be confirmed by observation with the SEM.

<Granular boron nitride>

The boron nitride composition of the present invention can be preferably produced by the method for producing the boron nitride composition containing the granular boron nitride of the above-described present invention and contains, in addition to the granular boron nitride, other components. The other components include the unreacted iron boride that has been contained in the iron boride composition to be nitride, but remains without participating in the nitriding reaction, a component that has been contained in the iron boride composition accompanied by the iron boride, an iron component that is generated as a by-product by the nitridation, and the like.

In the case of obtaining the boron nitride composition containing the granular boron nitride by nitriding the iron boride composition that is obtained by subjecting the iron oxide and the boron oxide to the boridation with the heating treatment, at least one of the iron oxide, the boron oxide, and carbon can be a component as "different components" that is contained in the iron boride composition accompanied by the iron boride. Such other components can be reduced in amount or substantially removed by the acid washing as described above and/or the above-described filtering, so that the granular boron nitride of the present invention can be obtained.

The granular boron nitride of the present invention has a substantially spherical steric structure in a preferable embodiment and can be thus blended with a resin material for the purpose of the improvement in thermal conduction anisotropy or increase in thermal conductivity. Furthermore, solid lubricity inherent to the granular boron nitride is maintained, so that molding processability as a resin composition can be thus favorably maintained even in the case of obtaining the resin composition by blending the granular boron nitride with a resin material. Furthermore, in the case of making a formed body, it becomes easy to form a thermal conduction path in the thickness direction of the body, which is derived from the shell structure of the granular boron nitride in the formed body. As a result, it is possible to increase the thermal conductivity of the formed body in its thickness direction. Additionally, the granular boron nitride of the present invention also has chemical stability, heat resistance, and the like, which are inherent to the boron nitride.

Upon obtaining the granular boron nitride of the present invention as described above, the boron nitride composition after the nitridation by the heating treatment and before or after the washing of the boron nitride composition (or during the washing) may be subjected to a classification treatment so that grain sizes of the granular boron nitride contained in the composition within a predetermined range. The classification may be performed by any appropriate method, and it is possible to use, for example, sieving (including filtering). When the granular boron nitride is thus classified, extremely small particles and/or extremely large particles can be removed, so that a granular boron nitride having uniform grain sizes (strictly speaking, an aggregate of individual granular boron nitrides, that is, a granular substance of a boron nitride) can be obtained. In one preferable embodiment, it is possible to obtain an aggregate of the individual granular boron nitrides, for example, an aggregation of spherical boron nitrides in which each (that is, every single) granular body, for example, the spherical body has a grain diameter within a predetermined grain size distribution width, for example, an aggregate of spherical boron nitrides.

<Resin composition containing granular boron nitride>

The resin composition of the present invention, particularly, a thermally conductive resin composition, contains the above-described granular boron nitride of the present invention and a resin material. That is, the granular boron nitride of the present invention can be suitably used as a thermal conductive filler in resin compositions as described above. Optionally, it is also possible to use the boron nitride composition containing the granular boron nitride (for example, the composition before the above-described washing) instead of the granular boron nitride.

<Resin material>

The resin material that functions as a resin that forms a matrix in the resin composition is not particularly limited and may be, for example, a curable resin, a thermoplastic resin, or the like. The curable resin may be a resin capable of crosslinking, such as a thermosetting resin, a photocurable resin, an electron beam-curable resin and the like, but is preferably a thermosetting resin from the viewpoints of heat resistance, water absorption properties, dimension stability, and the like, and in particular, an epoxy resin is optimal.

The epoxy resin may be only an epoxy resin having one kind of structural unit, but a plurality of epoxy resins having other structural units may also be combined together. In addition, the epoxy resin can be used together with a curing agent for the epoxy resin or a curing accelerator as necessary.

Here, in order to obtain a highly thermally conductive cured product having, in addition to coatability or film-forming properties and adhesiveness reduced voids in the cured product, at least a phenoxy resin, which will be described below, (hereinafter, referred to as "epoxy resin (A)") is preferably contained as the epoxy resin, and the epoxy resin (A) is preferably contained particularly such that the mass ratio of the epoxy resin (A) relative to the total amount of the epoxy resins is preferably within a range of 5 to 95 mass%, more preferably 10 to 90 mass%, and still more preferably within a range of 20 to 80 mass%, but the mass ratio is not limited thereto by any means.

The phenoxy resin normally refers to a resin that is obtained by reacting epihalohydrin and a divalent phenolic compound or a resin that is obtained by reacting a divalent epoxy compound and a divalent phenolic compound; however, in the present specification, among these, particularly, a phenoxy resin that is a high-molecular-weight epoxy resin having a mass-average molecular weight of 10000 or more is referred to as the epoxy resin (A). The mass-average molecular weight means a polystyrene-equivalent value measured by gel permeation chromatography.

As the epoxy resin (A), a phenoxy resin having at least one skeleton selected from the group consisting of a naphthalene skeleton, a fluorene skeleton, a biphenyl skeleton, an anthracene skeleton, a pyrene skeleton, a xanthene skeleton, an adamantane skeleton, and a dicyclopentadiene skeleton is preferable. Among these, a phenoxy resin having a fluorene skeleton and/or a biphenyl skeleton is particularly preferable since the heat resistance can be further increased. These may be used singly or two or more thereof may be mixed together and used.

As an epoxy resin other than the epoxy resin (A), an epoxy resin having two or more epoxy groups in a molecule (hereinafter, referred to as "epoxy resin (B)" in some cases) is preferable, and examples thereof include a variety of epoxy resins such as a bisphenol A type epoxy resin, a bisphenol F type epoxy resin, a naphthalene type epoxy resin, a phenol novolac type epoxy resin, a cresol novolac type epoxy resin, a phenol aralkyl type epoxy resin, a biphenyl type epoxy resin, a triphenylmethane type epoxy resin, a dicyclopentadiene type epoxy resin, a glycidyl ester type epoxy resin, a glycidyl amine type epoxy resin, and a multifunctional phenol type epoxy resin. These may be used singly or two or more thereof may be mixed together and used.

From the viewpoint of melt viscosity control, the mass-average molecular weight of the epoxy resin (B) is preferably 100 to 5000 and more preferably 200 to 2000. The epoxy resin (B) having a mass-average molecular weight of lower than 100 tends to be poor in heat resistance, and when the mass-average molecular weight is higher than 5000, the melting point of the epoxy resin becomes high, and there is a tendency that the workability deteriorates.

In addition, the epoxy resin according to the present invention may contain an epoxy resin other than the epoxy resin (A) and the epoxy resin (B) (hereinafter, "other epoxy resin") to an extent that the purpose thereof is not impaired. The content of the other epoxy resin is normally 50 mass% or less and preferably 30 mass% or less relative to the total of the epoxy resin (A) and the epoxy resin (B).

In the resin composition of the present invention, the proportion of the epoxy resin (A) in all epoxy resins containing the epoxy resin (A) and the epoxy resin (B) is preferably 5 to 95 mass%, preferably 10 to 90 mass%, and still more preferably 20 to 80 mass% as described above when the total thereof is 100 mass%. "All epoxy resins containing the epoxy resin (A) and the epoxy resin (B)" means the total of the epoxy resin (A) and the epoxy resin (B) in a case where the epoxy resin contained in the resin composition of the present invention is only the epoxy resin (A) and the epoxy resin (B), and means the total of the epoxy resin (A), the epoxy resin (B), and the other epoxy resin in a case where the other epoxy resin is further contained.

When the proportion of the epoxy resin (A) is equal to or more than the above-described lower limit, it is possible to sufficiently obtain a thermal conductivity improvement effect by the epoxy resin (A) blended, so that a desired high thermal conductivity can be obtained. When the proportion of the epoxy resin (A) is the upper limit or less, and particularly when the proportion of the epoxy resin (B) is 10 mass% or more of all of the epoxy resins, the effect of the epoxy resin (B) blended is exhibited, and the curability, and the physical properties of the cured product becomes sufficient.

The curing agent for the epoxy resin may be appropriately selected depending on the kind of the resin being used. Examples thereof include acid anhydride-based curing agents and amine-based curing agents. Examples of the acid anhydride-based curing agents include tetrahydrophthalic anhydride, methyltetrahydrophthalic anhydride, hexahydrophthalic anhydride, and benzophenonetetracarboxylic anhydride. Examples of the amine-based curing agents include aliphatic polyamines such as ethylenediamine, diethylenetriamine, and triethylenetetramine; aromatic polyamines such as diaminodiphenylsulfone, diaminodiphenylmethane, diaminodiphenylether, and m-phenylenediamine; and dicyandiamide. These may be used singly or two or more thereof may be mixed together and used. These curing agents for the epoxy resin are normally blended in an equivalent ratio to the epoxy resin within a range of 0.3 to 1.5.

The curing accelerator may be appropriately selected depending on the kind of the resin being used or the curing agent. Examples of the curing accelerator for the acid anhydride-based curing agent include boron trifluoride monoethylamine, 2-ethyl-4-methylimidazole, 1-isobutyl-2-methylimidazole, and 2-phenyl-4-methylimidazole. These may be used singly or two or more thereof may be mixed together and used. These curing accelerators are normally used within a range of 0.1 to 5 parts by mass relative to 100 parts by mass of the epoxy resin.

In addition, the resin material that is used in the resin composition of the present invention may be a thermoplastic resin. Examples of the thermoplastic resin include polyolefin resins such as a polyethylene resin, a polypropylene resin, and an ethylene-vinyl acetate copolymer resin, polyester resins such as a polyethylene terephthalate resin, a polybutylene terephthalate resin, and a liquid crystal polyester resin, polyvinyl chloride resins, phenoxy resins, acrylic resins, polycarbonate resins, polyphenylene sulfide resins, polyphenylene ether resins, polyamide resins, polyamide-imide resins, polyimide resins, polyetheramide-imide resin, polyether amide resin, and polyetherimide resins. In addition, copolymers, such as block copolymers and graft copolymers, thereof are also included. These may be used singly or two or more thereof may be mixed together and used.

In addition, the resin material may be a rubber component, and examples of the rubber component include natural rubber, polyisoprene rubber, styrene-butadiene copolymer rubber, polybutadiene rubber, ethylene-propylene copolymer rubber, ethylene-propylene-diene copolymer rubber, butadiene-acrylonitrile copolymer rubber, isobutylene-isoprene copolymer rubber, chloroprene rubber, silicone rubber, fluororubber, chloro-sulfonated polyethylene, polyurethane rubber, and the like. These may be used singly or two or more thereof may be mixed together and used.

<Amount of granular boron nitride blended in resin composition>

The amount of the granular boron nitride (or the boron nitride composition containing the granular boron nitride) of the present invention that is contained in the resin composition of the present invention is normally preferably 10% to 90%, more preferably 15% to 88%, and still more preferably 30% to 85% based on the mass of the resin composition as described above. In a case where the amount of the granular boron nitride in the resin composition is smaller than such a range, the viscosity (viscosity upon being melted) of the resin composition is low, and the molding processability is favorable, but the effect of improving the thermal conductivity may become insufficient. In a case where the amount of the granular boron nitride in the resin composition is larger than such a range, the viscosity of the resin composition when melted becomes high, and there is a tendency that molding becomes difficult.

<Other components in resin composition>

The resin composition of the present invention may contain other components as long as the effect of the present invention can be obtained. Examples of such components include functional resins obtained by imparting functionality to the above-mentioned resins, such as a liquid crystalline epoxy resin; nitride particles of aluminum nitride, silicon nitride, and fibrous boron nitride; insulating metal oxides, such as alumina, fibrous alumina, zinc oxide, magnesium oxide, beryllium oxide, and titanium oxide; insulating carbon components, such as diamond and fullerene; resin curing agents, resin curing accelerators, viscosity adjusters, and dispersion stabilizers.

In addition, the resin composition of the present invention may contain a solvent from the viewpoint of decreasing the viscosity of the resin composition. As this solvent, a well-known solvent that dissolves the resin can be used. Examples of such a solvent include methyl ethyl ketone, acetone, cyclohexanone, toluene, xylene, monochlorobenzene, dichlorobenzene, trichlorobenzene, phenol, and hexafluoroisopropanol. These may be used singly or two or more thereof may be mixed together and used. The solvent is used within a range of, for example, 0 to 10,000 parts by mass relative to 100 parts by mass of the resin, such as the epoxy resin.

In addition, to the resin composition of the present invention, an inorganic filler such as aluminum hydroxide or magnesium hydroxide, a surface treatment agent such as a silane coupling agent that improve the interfacial adhesive strength between the inorganic filler and the matrix resin, a reducing agent, or the like may be added as long as the effect of the resin composition is not impaired.

Regarding the above-described inorganic filler, the total amount of the granular boron nitride of the present invention and the inorganic filler in the resin composition is preferably 90 mass% or less for the purpose of maintaining molding processability in the resin composition.

<Production of resin composition>

The resin composition of the present invention can be obtained by uniformly mixing the granular boron nitride (or the boron nitride composition containing the granular boron nitride) of the present invention, the resin material, and other components that are added as necessary by stirring or kneading. For the mixing, for example, an ordinary kneading device such as a mixer, a kneader, or a single-screw or twin-screw kneader can be used, and heating may be performed during the mixing as necessary.

<Method for producing formed body, and formed body>

A formed body of the present invention is obtained by forming the resin composition of the present invention. As a forming method, that is, a method for producing the formed body, it is possible to use a method that is ordinarily used for forming, for example, injection molding or die molding, can be used depending on the properties of the resin composition. In any forming method, the resin composition is heated as necessary to be fluidized or plasticized, and the resin composition is formed into a molded body using a die or the like, so that a certain kind of force thus acts on the fluidized resin composition. For example, a pressure acts when the resin composition is loaded into a die. This is considered to be applicable regardless of whether the resin material is a curable resin (for example, a phenolic resin, an epoxy resin, a melamine resin, a urea resin, or the like) or a thermoplastic resin (for example, polyethylene, polypropylene, polyvinyl chloride, polystyrene, an acrylic resin, or the like).

For example, in a case where the resin composition of the present invention has plasticity or fluidity, the resin composition can be molded by being cured in a desired shape, for example, in a state of being loaded into a die. As such a method for producing the formed body, an injection molding method, an injection compression molding method, an extrusion molding method, and a compression molding method can be used. In addition, in a case where the resin composition of the present invention is a thermosetting resin composition containing an epoxy resin, a silicone resin, or the like, the forming of the molded body, that is, curing can be performed under curing conditions in accordance with each composition. Furthermore, in a case where the resin composition of the present invention is a composition containing a thermoplastic resin, the forming of the formed body can be performed at a temperature that is equal to or higher than the melting point of the thermoplastic resin and under a condition of a predetermined molding speed or pressure. The formed body of the present invention can be obtained by cutting a solid-form bulk material obtained by forming or curing the resin composition of the present invention into a desired shape.

In the formed body of the present invention that is obtained in the above-described manner, the thermal conductivity in a direction parallel to a direction in which a force is applied during the molding is normally 10 to 22 W/(mK) in one embodiment of a resin composition in which the mass-based amount of the resin material is 65 to 85%, 13 to 20 W/(m·K) in another embodiment, and 15 to 18 W/(mK) in still another embodiment while depending on the amounts of the resin material and the granular boron nitride (or the boron nitride composition containing the granular boron nitride). In addition, the thermal conductivity in a direction perpendicular to the direction in which a force is applied during the molding is normally 10 to 55 W/(m·K), 15 to 45 W/(m·K) in one embodiment, and 17 to 27 W/(mK) in another embodiment.

Therefore, when a resin composition is prepared using the granular boron nitride of the present invention, and a formed body is produced by performing press molding using this resin composition, ordinarily, the thermal conductivity in the direction parallel to the pressing direction (also referred to as the press parallel direction) is preferably 70 to 100%, more preferably 80 to 100%, and particularly 90 to 100% of the thermal conductivity in the direction perpendicular to the pressing direction (also referred to as the pressing perpendicular direction), the anisotropy of the formed body regarding thermal conduction can be significantly suppressed, and depending on the situation, the anisotropy can be substantially resolved. This tendency is the same even in a case where a press formed body is obtained by mixing the granular nitrogen composition of the present invention instead of the granular boron nitride and the resin material. In one particularly preferable embodiment, the resin composition contains 65 to 85 mass% of the granular boron nitride (or the boron nitride composition containing the granular boron nitride) based on the mass of the entire resin composition, and in a formed body that is produced using this resin composition, the ratio of the thermal conductivity in the press parallel direction to the thermal conductivity in the press perpendicular direction is normally at least approximately 80 and can be 100% or less.

Examples

Hereinafter, the present invention will be more specifically described with reference to Examples, but the present invention is not limited to such Examples.

[Raw materials used]

The specifications of raw materials used in the following Examples are as described below.

<Iron oxide ($Fe_2O_3$)>

Iron oxide powder: Manufactured by Kojundo Chemical Laboratory Co., Ltd., trade name: α-ferric oxide (purity: 99% or higher, average grain diameter: 1 μm)

<Boron oxide ($B_2O_3$)>

Boron oxide powder: Manufactured by FUJIFILM Wako Pure Chemical Corporation, trade name: diboron trioxide (purity: 99% or higher, average grain diameter: 75 μm)

<Carbon component>

Carbon powder: Manufactured by Mitsubishi Chemical Corporation, trade name: CARBON BLACK #2300 (volatile matter: 2% or more, average grain diameter: 15 nm)

<Auxiliary agents>

Fine powder yttrium ($Y_2O_3$): Manufactured by Nippon Yttrium Co., Ltd., trade name: fine powder yttrium oxide (purity: 99.9% or higher, average grain diameter: 0.91 $\mu$m)
Fine powder cerium oxide ($CeO_2$): Manufactured by Nippon Yttrium Co., Ltd., trade name: fine powder cerium oxide (purity: 99.9% or higher, average grain diameter: 0.58 $\mu$m)
Calcium carbonate ($CaCO_3$): Manufactured by FUJIFILM Wako Pure Chemical Corporation, trade name: calcium carbonate
(purity: 99.5%, average grain diameter: 75 $\mu$m) The amount of CAO shown in Table 1 was calculated with the assumption that $CaCO_3$ converts into an equimolar amount of CaO since $CaCO_3$ decomposes at near 800°C and turns into CaO.

<Epoxy resin materials>

Epoxy resin main agent (bisphenol A type epoxy resin) :
Manufactured by Mitsubishi Chemical Corporation, trade name: jER828,
Epoxy resin curing agent (methylbutenyltetrahydrophthalic anhydride):
Manufactured by Mitsubishi Chemical Corporation, trade name: YH-306,
Epoxy curing accelerator (2-ethyl-4-methylimidazole):
Manufactured by Mitsubishi Chemical Corporation, trade name: EMI24
Mixing ratio (mass-based, jER828:YH-306:EMI24)
100:80:2

[Production of boron nitride composition containing granular boron nitride and granular boron nitride]

<Example 1>

(Boridation by heating treatment)

15.969 G (0.1 mol) of a $Fe_2O_3$ powder as an iron oxide component and 6.962 g (0.1 mol) of a boron oxide $B_2O_3$ powder as a boron oxide component were crushed and mixed together for 30 minutes in an aluminum mortar using an automatic mortar (Nitto Kagaku Co., Ltd., ANM1000 type). This powder mixture was moved to a wide-mouth plastic bottle (capacity: 500 ml), 7.206 g (0.6 mol) of a carbon powder as a carbon component was further mixed therewith, furthermore, silicon nitride balls (400 g) having a diameter of 10 mm for crushing were put thereinto, and dry ball mill mixing (manufactured by Nikka Engineering Co., Ltd.) was performed for 18 hours. 28 g of the obtained raw material powder mixture (the $Fe_2O_3$ powder, the $B_2O_3$ powder, and the carbon powder) was put into a boron nitride crucible, and a heating treatment was performed for one hour at a predetermined heat treatment temperature of 1300°C in an argon atmosphere in a heating treatment furnace (electric furnace, Fuji Dempa Kogyo Co., Ltd., HI MULTI 5000) to synthesize an iron boride, and 16 g of an iron boride composition containing a powdery or granular iron boride was obtained.
The detailed temperature profile during the heating treatment was as follows:

From room temperature up to 1100°C: The temperature was raised at 20°C/minute
From 1100°C up to predetermined heat treatment temperature (1300°C): The temperature was raised at 100°C/minute
The temperature was held for one hour at the predetermined heat treatment temperature (1300°C)
From the predetermined heat treatment temperature to room temperature: The temperature was lowered at 20°C/minute

The atmosphere in the heating treatment furnace was held at a vacuum of lower than $1 \times 10^{-1}$ Pa from room temperature up to 300°C, subsequently, an argon gas was introduced into the furnace up to the atmospheric pressure, and an argon gas flowing state of 1 ml/minute was held until the end of the heating treatment.
As a result of analyzing the obtained (visually) powdery iron oxide composition by X-ray diffraction (XRD), it was found that $Fe_2B$ and FeB were contained in a crystal phase. The raw material powder mixture for the boridation by the heating treatment contained equimolar amounts of the iron oxide and the boron oxide, and these were blended together with the assumption of the generation of FeB through the reaction of them, but the generation of $Fe_2B$ means that the boron oxide was not consumed but remained. This remaining boron oxide is presumed to be present as an amorphous phase. In the obtained iron boride composition, in addition to the above-described iron boride, residual reaction raw material components (iron oxide, boron oxide, and carbon) and other components accompanied by the reaction raw material components may also be contained.

A SEM photograph (magnification: 2000 times) of the obtained iron boride composition is shown in Figure 5. In Figure 5, brightly shining spherical particles are the iron boride ($Fe_2B$ or FeB), and it is found that the sizes of the particles are relatively uniform. Portions other than the particles in this photograph (amorphous portions like glass) are assumed to be $B_2O_3$ containing carbon.

(Nitridation by heating treatment)

The iron boride composition obtained by the above-described boridation by the heating treatment was crushed for five minutes with the automatic mortar. As a result of measuring the grain size distribution of the iron boride composition, grains having a grain diameter of 20 $\mu$m or more were not substantially present. 16 g of this iron boride composition was put into the silicon nitride crucible, a heating treatment was performed at a predetermined heat treatment temperature of 2000°C for five hours in a nitrogen atmosphere in the heating treatment furnace (electric furnace, Fuji Dempa Kogyo Co., Ltd., HI MULTI 5000) to perform the nitridation and synthesize a boron nitride, and 13 g of a visually powdery boron nitride composition was obtained.

The detailed temperature profile during the heating treatment was as follows:

From room temperature up to 1100°C: The temperature was raised at 20°C/minute
From 1100°C up to predetermined heat treatment temperature (2000°C): The temperature was raised at 100°C/30 minutes
The temperature was held for five hours at the predetermined heat treatment temperature (2000°C)
From the predetermined heat treatment temperature to room temperature: The temperature was lowered at 20°C/minute

The atmosphere in the heating treatment furnace was held at a vacuum of lower than $1 \times 10^{-1}$ Pa from room temperature up to 300°C, subsequently, a nitrogen gas was introduced into the furnace up to the atmospheric pressure, and a nitrogen gas flowing state of 2 ml/minute was held until the end of the heating treatment.

As a result of analyzing the obtained boron nitride composition by X-ray diffraction (XRD), it was found that a hexagonal boron nitride (h-BN) was generated. In the iron boride composition that was subjected to the nitridation, components other than the iron borides such as FeB and $Fe_2B$ (oxides such as $Fe_2O_3$ and $B_2O_3$, a trace amount of carbon) were contained, but no adverse influence on the nitridation by the presence thereof was recognized.

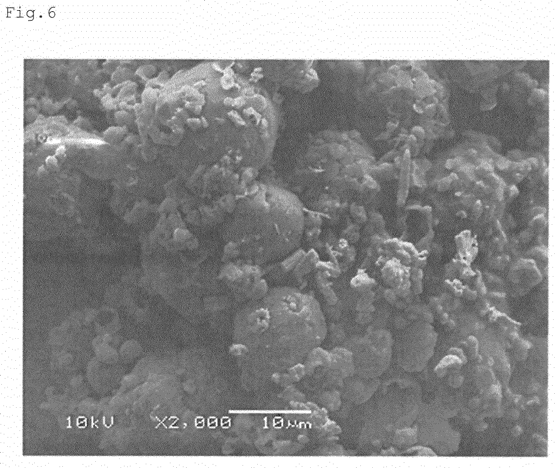

A SEM photograph of the obtained boron nitride composition (therefore, before washing) is shown in Figure 6. In Figure 6, it is found that a large number of grains having relatively uniform sizes (therefore, granular boron nitride) have a substantially spherical steric structure. That is, this granular boron nitride is a spherical boron nitride.

(Acid washing)

The nitrogen boride composition obtained in the above-described manner was washed with an acid, and iron components (an iron nitride, an iron carbide, and the like), oxides ($Fe_2O_3$, $B_2O_3$, $Fe_3O_6$, $FeBO_3$, and the like), and unreacted borides (FeB, $Fe_2B$, and the like) were removed. In detail, 13 g of the boron nitride composition was added to 20 ml of a 6N hydrochloric acid aqueous solution in a TEFLON-lined sealed pressure container, reacted at 100°C for 11 hours to convert the iron components, the oxides, the borides, and the like, which were contained therein, into water-soluble salts. After that, the nitrogen boride composition was washed with pure water and filtered to remove the salts and was dried, thereby obtaining the granular boron nitride of the present invention. In the filtering, a filter paper (manufactured by ADVANTEC CO., LTD., trade name: 5C, retention particle diameter: 1 $\mu$m) was used.

As a result of XRD analysis of the obtained granular boron nitride, the oxides or the borides that may remain therein cannot be detected. In addition, a SEM photograph of the granular boron nitride obtained after the acid washing is shown in Figure 1. It is found in Figure 1 (after washing),that, similar to the SEM photograph of Figure 6 (before washing), a large number of grains having relatively uniform sizes (therefore, granular boron nitride) have a substantially spherical steric structure. That is, this granular boron nitride is a spherical boron nitride.

<Examples 2 to 12>

In these Examples, Example 1 was repeated except that at least one of the mole ratio between the iron oxide and the boron oxide in the boridation, the boriding temperature and time, the nitriding temperature and time was changed as shown in Table 1 of Figure 9, the iron boride compositions were obtained, which were subjected to the nitridation to obtain the boron nitride compositions, and the boron nitride compositions were washed with an acid, filtered, and then dried, thereby obtaining the granular boron nitrides.

<Example 13>

Example 1 was repeated except that, at the time of the nitridation by the heating treatment, yttrium oxide ($Y_2O_3$) was added as an auxiliary agent as shown in Table 1 of Figure 9 to the iron boride composition obtained by the boridation as described above, the iron boride composition was subjected to the nitridation by the heating treatment to obtain a boron nitride composition containing the granular boron nitride, the boron nitride composition was washed with an acid and filtered, whereby the oxide including the auxiliary agent or the like was removed, and the boron nitride composition was then dried to obtain the granular boron nitride (in the present example, the spherical boron nitride).

The amount of the auxiliary agent shown in Table 1 of Figure 9 is indicated as the ratio (mass%) of the mass of the auxiliary agent mixed to the mass of a boron nitride that is generated in a case where all of iron that is contained in the iron boride used for the boridation by the heating treatment is assumed to convert into iron monoboride (FeB) and all of boron that is contained in the iron monoboride is assumed to convert into a boron nitride.

<Examples 14 to 27>

In these Examples, Example 13 was repeated except that at least one of the temperature and time of the boridation by the heating treatment, the temperature and time of the nitridation by the heating treatment, and the kind and added amount of an auxiliary agent was changed as shown in Table 1 of Figure 9, the iron boride compositions were obtained, these were subjected to the nitridation to obtain the boron nitride compositions containing the granular boron nitride, and these were washed with an acid, filtered, and dried, thereby obtaining the granular boron nitrides.

In the removal of the oxide or the like by the acid washing from the boron nitride composition that is obtained by the nitridation, since relatively concentrated 6N hydrochloric acid is used, the oxide added as the auxiliary agent can also be removed which is relatively not readily removed by the washing. However, in a case there is no need to necessarily remove the auxiliary agent, the acid washing conditions may be mitigated. For example, it is possible to decrease the hydrochloric acid concentration, lower the acid washing temperature, and or decrease the acid washing time.

The visually observed forms (BN shapes observed with a SEM, magnification: 2000 times) of the granular boron nitrides (randomly collected after acid washing, filtering, and drying) of the boron nitride compositions containing the granular boron nitride obtained in Examples 1 to 27 described above, the measurement results of the average grain diameters, the grain size uniformity, and the sphericities which have been described above, are shown in Table 1 together with the boriding conditions by heating and the nitriding conditions by heating. For comparison, the measurement results of the average grain diameters, the grain size uniformity, and the sphericities of the granular boron nitrides obtained in Example 17 and Comparative Example 5 described Patent Literature 2 are shown in Table 2 of Figure 10 as Reference Examples 1 and 2.

From these results, it is possible to derive the following preferable conditions for the production of the boron nitride composition containing the granular boron nitride: as the boriding treatment conditions for producing the iron boride composition from $Fe_2O_3$, $B_2O_3$, and a carbon powder, $Fe_2O_3$ and $B_2O_3$ are mixed together such that the mixing mole ratio between $Fe_2O_3$ and $B_2O_3$ is preferably 1.5:1 to 1:3 and particularly preferably 1.2:1 to 1:1.2 and are added such that oxygen contained in these oxides can be all discharged as a CO gas and the mole ratio between oxygen atoms in the oxides and carbon atoms in the oxides becomes 1:1, thereby producing a raw material mixture for the boridation. Such a raw material mixture was subjected to the heating treatment preferably at 1200°C to 1500°C for one to two hours, particularly preferably at 1250°C to 1300°C for one to two hours in an argon atmosphere for boriding, whereby the iron boride composition is obtained. In addition, the obtained iron boride composition was preferably crushed into 20 $\mu$m or less particles using an automatic mortar and is then subjected to the heating treatment preferably at 1800°C to 2000°C for five to 10 hours, for example, at 2000°C for five to 10 hours in a nitrogen atmosphere, whereby the boron nitride composition containing the granular boron nitride including the spherical boron nitride can be obtained. In this case, for the obtained spherical boron nitride, the average grain diameter is preferably 20 to 50 $\mu$m, for example, 20 to 40 $\mu$m, the sphericity is, for example, 10 or less and preferably 7 or less, and the spread index (grain size uniformity) is, for example, 0.4 or less and preferably 0.3 or less.

<Production of resin composition and formed body>

As shown in Table 3 of Figure 11, the granular boron nitrides of the present invention (granular boron nitrides after acid washing, filtering, and drying) obtained in several of the above-described Examples were added to and mixed with epoxy resin materials to obtain the resin compositions of Examples 28 to 44, respectively. The mass-based compositions of the resin compositions were 81.7% (70 vol%) of the granular boron nitride and 18.3% (30 vol%) of the epoxy resin material, or 74.2% (60 vol%) of the granular boron nitride and 25.8% (40 vol%) of the epoxy resin material. The values of the thermal conductivities disclosed in Patent Literature 2 regarding formed bodies for which the granular boron nitrides of Reference Examples 1 and 2 were used are included in Table 3 as Reference Examples 3 and 4. Additionally, a formed body for which the granular boron nitride of Reference Example 1 was used was prepared as Reference Example 5, and the thermal conductivity thereof was measured.

In detail, in a case where 81.7% (70 vol%) of the granular boron nitride and 18.3% (30 vol%) of the epoxy resin material were mixed together, 1.0 g of the obtained granular boron nitride (after acid washing, filtering, and drying), 0.1229 g of a bisphenol A type liquid epoxy (main agent) (manufactured by Mitsubishi Chemical Corporation: jER828), 0.0983 g of methyltetrahydrophthalic anhydride (curing agent) (manufactured by Mitsubishi Chemical Corporation: YH-306), 0.00246 g of 2-ethyl-4-methylimidazole (curing accelerator) (manufactured by Mitsubishi Chemical Corporation: EMI24), and 20 g of acetone (manufactured by FUJIFILM Wako Pure Chemical Corporation: special grade reagent) were added to a 100 ml eggplant flask and mixed together for five minutes using ultrasonic waves.

In a case where 74.2% (60 vol%) of the granular boron nitride and 25.8% (40 vol%) of the epoxy resin material were mixed together, 1.0 g of the obtained granular boron nitride (after acid washing, filtering, and drying), 0.1911 g of a bisphenol A type liquid epoxy (main agent) (manufactured by Mitsubishi Chemical Corporation: jER828), 0.1529 g of methyltetrahydrophthalic anhydride (curing agent) (manufactured by Mitsubishi Chemical Corporation: YH-306), 0.00382 g of 2-ethyl-4-methylimidazole (curing accelerator) (manufactured by Mitsubishi Chemical Corporation: EMI24), and 20 g of acetone (manufactured by FUJIFILM Wako Pure Chemical Corporation: special grade reagent) were added to a 100 ml eggplant flask and mixed together for five minutes using ultrasonic waves.

Subsequently, the acetone was removed using an evaporator. 0.8 G of the mixture as a resin composition containing the granular boron nitride and the epoxy resin material that remained in the eggplant flask after the removal of the acetone was put into a mold having a diameter of 15 mm and hot-pressed, whereby the resin composition was thermally cured and two formed bodies (diameter: 15 mm, thickness: 1.2 mm or 1.5 to 2.4 mm) were obtained.

The hot pressing conditions are as described below:

· Regarding Reference Examples 3 and 4 and Examples 26 and 28 to 31, hot pressing is performed for 120 minutes at 125°C under a uniaxial pressure of 70 MPa

· Regarding Examples 27 and 32 to 36, hot pressing is performed for 120 minutes at 125°C under a uniaxial pressure of 23 MPa.

· Regarding Reference Example 5 and Examples 37 to 42, hot pressing is performed for 120 minutes at 125°C under a uniaxial pressure of 10 MPa.

<Measurement of thermal conductivity of formed body>

The density, specific heat, and thermal diffusivity of the obtained formed bodies were each measured, and the thermal conductivity of the formed bodies was calculated based on the following equation:

Thermal conductivity = density $\times$ specific heat $\times$ heat diffusivity

<Measurement of density>

The formed body of the epoxy resin material and the granular boron nitride was measured in water by the Archimedes method and the density was obtained by the following (Equation 1):
[Math 4]

$$\rho = (\rho_a \times m_1) \,/\, (m_1 - m_2) \qquad \text{Equation (1)}$$

In the equation, $\rho$ is the density (g/cm$^3$) of the formed body, $\rho_a$ is the density (g/cm$^3$) of water at the measurement temperature, $m_1$ is the mass (g) of the formed body in the air, and $m_2$ is the mass of the formed body in water.

<Measurement of specific heat>

Using a differential scanning calorimeter (manufactured by NETZSCH-Geratebau GmbH, DSC200F 3Maia), the temperatures of a known reference material (sapphire in the present measurement) and the formed body as a specimen were measured while constant heat was applied thereto, and thermal analysis was performed by measuring the temperature difference, thereby obtaining the specific heat. The specific heat of the specimen was obtained by the following (Equation 2). The temperature measurement range was set to -50°C to 100°C, and the specific heat at 25°C, which is the same measurement temperature as for the following thermal diffusivity, was used for the calculation of the specific heat.

[Math 5]

$$C_p = (m／M) \times (h／H) \times C_{p\,standard} \qquad \text{Equation (2)}$$

In the equation, Cp is the specific heat (J/g/K) of the formed body specimen, $Cp_{standard}$ is the specific heat (J/g/K) of the reference material, m is the weight (g) of the formed body specimen, M is the weight (g) of the reference material, h is the difference in DSC curve between an empty container and the formed body specimen, and H is the difference in DSC curve between the empty container and the reference material.

<Measurement of thermal diffusivity>

The thermal diffusivity was measured using a xenon flash method thermal constant measuring instrument (manufactured by NETZSCH-Geratebau GmbH Xe flash analyzer, LFA447 Nanoflash). The front surface of the formed body specimen is irradiated with a heat source and the temperature of the rear surface is measured, and the thermal diffusivity ($\alpha$) is obtained by the following equation (3) from a time $t_{1/2}$ (s) that is half of a time ($\Delta$Tm) taken for the temperature of the rear surface to reach the highest temperature of the rear surface and the specimen thickness L (m):
[Math 6]

$$\alpha\ (m^2／s) = 0.1388 \times L^2／t_{1/2} \qquad \text{Equation (3)}$$

The thermal conductivity of the formed bodies was measured in a pressure direction (pressing direction) of the pressure applied during the hot pressing and a direction perpendicular thereto. In the pressing direction, the surface of the hot-pressed formed body having a diameter of 15 mm and a thickness of 1.2 mm was polished with #1000 waterproof abrasive paper to produce a sample having a thickness of approximately 1 mm, and the thermal conductivity was measured as described above. In the direction perpendicular to the press direction, five to seven prismatic pieces having a length of 10 mm, a width of 2.0 mm, and a thickness of 1.5 to 2.4 mm were cut out from the formed body having a diameter of 15 mm and a thickness of 2.4 mm, pasted together to obtain thin quadrilateral plate-like products having a length of approximately 10 mm, a width of approximately 10.5 to 12.0 mm, and a thickness of 2.0 mm in such state that the pieces were rotated 90° so that the widths thereof were aligned to the thickness direction of such product The surfaces of the product were further polished with #1000 waterproof abrasive paper to obtain a sample having a length of 10 mm, a width of 10 mm, and a thickness of approximately 1 mm, the sample was subjected to the measurement.

<Conditions and measurement results of thermal conductivities of Examples and Reference Examples >

The conditions and the measurement results of thermal conductivities of Examples and Reference Examples described above are shown in Table 3 of Figure 11.
From these results, it is found that the formed bodies for which the spherical boron nitride that is the granular boron nitride of the present invention was used provided substantially equivalent or higher thermal conductivities compared with those of the formed bodies for which a granular boron nitride is used (Reference Example 3 to Reference Example 5) described in Patent Literature 2.
Since the granular boron nitrides of Reference Examples 1 and 2 have relatively broad grain size distributions and small grain diameters, an extremely large pressing pressure (for example, 70 MPa) is required during molding to achieve a high thermal conductivity. Such a pressing pressure may cause the collapse of the steric structure of the granular boron nitride depending on the situation.
In the case of the formed body for which the spherical boron nitride of the invention of the present application is used, it is possible to provide a thermal conductivity that is almost the same as that in Patent Literature 2 in the press parallel direction and is increased in the press perpendicular direction even at a pressing pressure of 70 MPa. In order to perform molding at a lower pressing pressure, which is considered to be desirable in molding, it is necessary to increase the amount of the resin. As is clear from the results of Examples 34 to 38, even when the pressing pressure is set to as small as 23 MPa, the thermal conductivity does not significantly decrease(the collapse of the granular boron nitride being suppressed is assumed to be one reason for such not significantly decrease) compared with the thermal conductivities in the case of 70 MPa (when compared with Reference Examples 3 and 4, the thermal conductivities in the press parallel direction are almost the same, and the thermal conductivities in the press perpendicular direction have increased).

Additionally, as in Examples 39 to 44, even when the pressing pressure is set to be smaller as 10 MPa, and the amount of the resin is decreased to 25.8 mass%, the difference between the thermal conductivity in the press parallel direction and the thermal conductivity in the press perpendicular direction is small, and the numerical values themselves thereof also do not have significantly decreased (grain size uniformity and larger grain diameters are assumed to be one reason for the small difference and the not significantly decrease). This demonstrates that the granular boron nitride of the present invention can functioning as a thermal conductive filler which is capable of providing a formed body having a near isotropic thermal conductivity. In addition, when compared with Reference Example 5 where the conditions are the same, the thermal conductivity has increased in both of the directions.

When the results of Figure 3 are referred to, in the formed body of the present invention, while also depending on the method for producing the boron nitride composition, the thermal conductivity in the press parallel direction is preferably at least approximately 40%, more preferably at least approximately 50%, and particularly preferably at least approximately 90% of the thermal conductivity in the press perpendicular direction. Therefore, the boron nitride composition containing the granular boron nitride, the granular boron nitride, or the spherical boron nitride of the present invention is capable of improving the isotropy of formed bodies that are obtained by forming the boron nitride composition, the granular boron nitride, or the spherical boron nitride after being mixed with the resin material.

Industrial Applicability

Therefore, the resin composition of the present invention and the formed body produced by forming the composition can be suitably used as thermal conductive fillers in, for example, heat dissipation sheets, thermally conductive pastes, thermally conductive adhesives, and the like for which thermal conductivity is required in the electrical/electronic fields and the like.

The present invention includes the following embodiments:

(Embodiment 1)

A method for producing a boron nitride composition containing a granular boron nitride, comprising subjecting an iron boride composition containing an iron boride to a heating treatment at 1750°C to 2300°C under a nitrogen gas atmosphere for nitriding boron.

(Embodiment 2)

The method for producing a boron nitride composition according to Embodiment 1, wherein the iron boride is at least one selected from $FeB$, $Fe_2B$, and $Fe_3B$.

(Embodiment 3)

The method for producing a boron nitride composition according to Embodiment 1 or 2, wherein the iron boride composition further contains at least one selected from $CaO$, $CeO_2$, and $Y_2O_3$ as an auxiliary agent.

(Embodiment 4)

The method for producing a boron nitride composition according to any of Embodiments 1 to 3, wherein the iron boride composition is obtained by subjecting a raw material mixture containing an iron oxide component, a boron oxide component, and a carbon component to a heating treatment at 1150°C to 1600°C under an inert gas atmosphere for boriding iron.

(Embodiment 5)

The method for producing a boron nitride composition according to Embodiment 4, wherein the iron oxide component contains at least one selected from $Fe_2O_3$, $Fe_3O_4$, and $FeO$.

(Embodiment 6)

The method for producing a boron nitride composition according to Embodiment 4 or 5, wherein the boron oxide component contains at least one selected from $B_2O_3$, $B_4O_3$, and $B_4O_5$.

# EP 4 570 746 A1

(Embodiment 7)

The method for producing a boron nitride composition according to any of Embodiments 4 to 6, wherein the iron boride composition that is obtained by boridation by the heating treatment is crushed and then nitrided by a heating treatment.

(Embodiment 8)

The method for producing a boron nitride composition according to any of Embodiments 1 to 7, wherein, after the nitridation by the heating treatment, a washing treatment with an acid is performed.

(Embodiment 9)

A boron nitride composition comprising a granular boron nitride having a shell structure and having a sphericity of 10 or less.

(Embodiment 10)

The boron nitride composition according to Embodiment 9, wherein the granular boron nitride has an average grain diameter of 2 to 75 $\mu$m and preferably 10 to 50 $\mu$m.

(Embodiment 11)

The boron nitride composition according to Embodiment 9 or 10, wherein the granular boron nitride has a spread index of 0.3 or less.

(Embodiment 12)

The boron nitride composition according to Embodiment 9 or 10 that is produced by the method for producing a boron nitride composition according to Embodiment 6.

(Embodiment 13)

A resin composition comprising the granular boron nitride according to Embodiment 9 or 10, and a resin material.

(Embodiment 14)

A formed body that is produced by forming the resin composition according to Embodiment 13.

## Claims

1. A method for producing a boron nitride composition containing a granular boron nitride, comprising subjecting an iron boride composition containing an iron boride to a heating treatment at 1750°C to 2300°C under a nitrogen gas atmosphere for nitriding boron in the iron boride.

2. The method for producing a boron nitride composition according to claim 1, wherein the iron boride is at least one selected from FeB, $Fe_2B$, and $Fe_3B$.

3. The method for producing a boron nitride composition according to claim 2, wherein the iron boride composition further contains at least one selected from CaO, $CeO_2$, and $Y_2O_3$ as an auxiliary agent.

4. The method for producing a boron nitride composition according to claim 2 or 3, wherein the iron boride composition is obtained by subjecting a raw material mixture containing an iron oxide component, a boron oxide component, and a carbon component to a heating treatment at 1150°C to 1600°C under an inert gas atmosphere for boriding iron.

5. The method for producing a boron nitride composition according to claim 4, wherein the iron oxide component contains at least one selected from $Fe_2O_3$, $Fe_3O_4$, and FeO.

6. The method for producing a boron nitride composition according to claim 5, wherein the boron oxide component contains at least one selected from $B_2O_3$, $B_4O_3$, and $B_4O_5$.

7. The method for producing a boron nitride composition according to claim 6, wherein the iron boride composition that is obtained by boridation by the heating treatment is crushed and then nitrided by the heating treatment.

8. The method for producing a boron nitride composition according to claim 6, wherein, after the nitridation by the heating treatment for nitriding, a washing treatment with an acid is performed.

9. A boron nitride composition comprising a granular boron nitride having a shell structure and having a sphericity of 10 or less.

10. The boron nitride composition according to claim 9, wherein the granular boron nitride has an average grain diameter of 2 to 75 $\mu$m and preferably 10 to 50 $\mu$m.

11. The boron nitride composition according to claim 9 or 10, wherein the granular boron nitride has a spread index of 0.3 or less.

12. The boron nitride composition according to claim 9 or 10 that is produced by the method for producing the boron nitride composition according to claim 6.

13. A resin composition comprising the granular boron nitride according to claim 9 or 10, and a resin material.

14. A formed body that is produced by forming the resin composition according to claim 13.

Fig. 1

（a）

（b）

Fig.2

10μm

Fig.3

20μm

Fig.4

Fig.5

Fig.6

Fig.7

（a）

（b）

（c）

（d）

（e）

Fig.8

（a）

（b）                    （c）

（d）                    （e）

Fig.9

[Table 1]

| | Raw material composition in boriding treatment $Fe_2O_3:B_2O_3$ (mole ratio) | Heating treatment conditions Boriding temperature and time | Nitriding temperature and time | Amount of auxiliary agent added in nitriding treatment (mass%) | BN shape | Average grain diameter (μm) | Grain size uniformity | Sphericity |
|---|---|---|---|---|---|---|---|---|
| Example 1 | 1:1 | 1300°C·1h | 2000°C·5h | None | Spherical | 17.6 | 0.226 | 1.9 |
| Example 2 | 1.5:1 | 1300°C·1h | 2000°C·5h | None | Spherical | 94.2 | 0.149 | 5.1 |
| Example 3 | 1.1:1 | 1300°C·1h | 2000°C·5h | None | Spherical | 48.2 | 0.218 | 8.3 |
| Example 4 | 1:1.2 | 1300°C·1h | 2000°C·5h | None | Spherical | 44.5 | 0.187 | 7.8 |
| Example 5 | 1:1.5 | 1300°C·1h | 2000°C·5h | None | Fine grain, partially spherical | 2.28 | 0.261 | 6.4 |
| Example 6 | 1:2 | 1300°C·1h | 2000°C·5h | None | Fine grain, Partially spherical | 8.1 | 0.418 | 5.6 |
| Example 7 | 1:1 | 1300°C·1h | 2000°C·10h | None | Spherical | 27.8 | 0.183 | 1.9 |
| Example 8 | 1:1 | 1250°C·2h | 2000°C·5h | None | Spherical | 23.7 | 0.185 | 4.1 |
| Example 9 | 1:1 | 1400°C·1h | 2000°C·5h | None | Spherical | 29.2 | 0.203 | 6.7 |
| Example 10 | 1:1 | 1500°C·1h | 2000°C·5h | None | Spherical | 37.1 | 0.254 | 4.3 |
| Example 11 | 1:1 | 1200°C·1h | 2000°C·5h | None | Fine grain | 11.6 | 0.335 | 5.6 |
| Example 12 | 1:1 | 1300°C·1h | 1800°C·5h | None | Spherical | 12.6 | 0.327 | 6.1 |
| Example 13 | 1:1 | 1300°C·1h | 2000°C·5h | $Y_2O_3$·2.2 mass% | Spherical | 21.7 | 0.212 | 2.7 |
| Example 14 | 1:1 | 1300°C·1h | 2000°C·5h | $Y_2O_3$·10.4 mass% | Spherical | 23.7 | 0.149 | 2.3 |
| Example 15 | 1:1 | 1300°C·1h | 2000°C·5h | $Y_2O_3$·19.6 mass% | Spherical | 29.2 | 0.214 | 3.1 |
| Example 16 | 1:1 | 1300°C·1h | 2000°C·5h | $CeO_2$·3 mass% | Spherical | 22.6 | 0.187 | 1.4 |
| Example 17 | 1:1 | 1300°C·1h | 2000°C·5h | $CeO_2$·14.1 mass% | Spherical | 34.9 | 0.169 | 4.7 |
| Example 18 | 1:1 | 1300°C·1h | 2000°C·5h | $CeO_2$·25.7 mass% | Spherical, partially collapse | 74.5 | 0.172 | 5.3 |
| Example 19 | 1:1 | 1300°C·1h | 2000°C·5h | CaO·1.5 mass% | Spherical | 24.7 | 0.116 | 2.2 |

| | | | | | BN shape | Average grain diameter | Grain size uniformity | Sphericity |
|---|---|---|---|---|---|---|---|---|
| Example 20 | 1:1 | 1300°C·1h | 2000°C·5h | CaO ·3.6 mass% | Spherical | 21.8 | 0.235 | 6.8 |
| Example 21 | 1:1 | 1300°C·1h | 2000°C·5h | CaO ·13.9 mass% | Spherical, partially collapse | 52 | 0.184 | 5.3 |
| Example 22 | 1:1 | 1250°C·2h | 2000°C·5h | $CeO_2$·7.4 mass% | Spherical | 26.5 | 0.196 | 7.9 |
| Example 23 | 1:1 | 1250°C·2h | 2000°C·5h | $CeO_2$·14.1 mass% | Spherical | 30.1 | 0.163 | 6.3 |
| Example 24 | 1:1 | 1250°C·2h | 2000°C·5h | $CeO_2$·20.2 mass% | Spherical | 38.6 | 0.167 | 6.1 |
| Example 25 | 1:1 | 1250°C·2h | 2000°C·5h | $CeO_2$·25.7 mass% | Spherical | 48.1 | 0.255 | 7.5 |
| Example 26 | 1:1 | 1250°C·2h | 2000°C·5h | $CeO_2$·30.8 mass% | Spherical | 57.3 | 0.218 | 8.4 |
| Example 27 | 1:1 | 1250°C·2h | 2000°C·5h | $CeO_2$·35.5 mass% | Planar, Partially spherical | 70.3 | 0.213 | 9.5 |

BN shape: shape shown by half (based on number) or more of particles in visual field on SEM photograph (magnification: 2000 times)

Fine grain: small grains having apparent grain diameters of approximately 1 μm to approximately 12 μm are referred to as "fine grains" for convenience

Grain size uniformity: log standard deviation

Sphericity: (Standard deviation of axial diameter lengths/average of axial diameter lengths) × 100

Fig.10

[Table 2]

| | Raw material composition | | | BN shape | Average grain diameter (μm) | Grain size uniformity<br>Log standard deviation | Sphericity<br>(standard deviation/average axial diameter)×100 |
|---|---|---|---|---|---|---|---|
| Reference Example | Metal oxide + calcium oxide | | BN (mass%) | | | | |
| | $Y_2O_3$:CaO (mole ratio) | $Y_2O_3$+CaO (mass%) | | | | | |
| Reference Example 1 | 1:4 | 37.1 | 62.9 | Polyhedron | 18.1 | 0.385 | 12.1 |
| Reference Example 2 | 1:0 | 42.5 | 57.5 | Polyhedron | 9.4 | 0.326 | 14.4 |

Fig.11

[Table 3]

| Examples or Reference Examples | Resin composition/molding pressing pressure | | | | Thermal conductivity of formed body | |
|---|---|---|---|---|---|---|
| | Amount of granular BN added (mass%) | Examples or Reference Examples where granular BN is produced | Amount of epoxy resin (mass%) | Pressing pressure (MPa) | Press parallel direction (W/mK) | Press perpendicular direction (W/mK) |
| Reference Example 3 | 81.7 | Reference Example 1 | 18.3 | 70 | 20.7 | 26.7 |
| Reference Example 4 | 81.7 | Reference Example 2 | 18.3 | 70 | 13.8 | 17.6 |
| Reference Example 5 | 74.2 | Reference Example 1 | 25.8 | 10 | 10.3 | 10.5 |
| Example 28 | 81.7 | Example 1 | 18.3 | 70 | 14.9 | 20.1 |
| Example 29 | 81.7 | Example 8 | 18.3 | 23 | 15 | 17 |
| Example 30 | 81.7 | Example 9 | 18.3 | 70 | 14.1 | 53.7 |
| Example 31 | 81.7 | Example 13 | 18.3 | 70 | 12.8 | 24.7 |
| Example 32 | 81.7 | Example 16 | 18.3 | 70 | 14.7 | 40.9 |
| Example 33 | 81.7 | Example 19 | 18.3 | 70 | 13.5 | 29.8 |
| Example 34 | 81.7 | Example 22 | 18.3 | 23 | 16.1 | 39.9 |
| Example 35 | 81.7 | Example 23 | 18.3 | 23 | 16.1 | 32.6 |
| Example 36 | 81.7 | Example 24 | 18.3 | 23 | 17.3 | 27.9 |
| Example 37 | 81.7 | Example 25 | 18.3 | 23 | 14.2 | 31 |
| Example 38 | 81.7 | Example 27 | 18.3 | 23 | 11 | 34.3 |
| Example 39 | 74.2 | Example 8 | 25.8 | 10 | 12.9 | 13.9 |
| Example 40 | 74.2 | Example 22 | 25.8 | 10 | 13.7 | 14.1 |
| Example 41 | 74.2 | Example 23 | 25.8 | 10 | 14.3 | 15 |
| Example 42 | 74.2 | Example 24 | 25.8 | 10 | 16.3 | 23.2 |
| Example 43 | 74.2 | Example 25 | 25.8 | 10 | 16.6 | 25.1 |
| Example 44 | 74.2 | Example 26 | 25.8 | 10 | 16.1 | 29.8 |

## INTERNATIONAL SEARCH REPORT

| International application No. |
|---|
| **PCT/JP2023/028913** |

**A.    CLASSIFICATION OF SUBJECT MATTER**

*C01B 21/064*(2006.01)i; *C01B 35/04*(2006.01)i; *C08L 101/00*(2006.01)i; *C08K 3/22*(2006.01)i; *C08K 3/38*(2006.01)i
FI:    C01B21/064 B; C08L101/00; C08K3/38; C08K3/22; C01B35/04 C

According to International Patent Classification (IPC) or to both national classification and IPC

**B.    FIELDS SEARCHED**

Minimum documentation searched (classification system followed by classification symbols)

C01B21/064; C01B35/04; C08L101/00; C08K3/22; C08K3/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); JSTChina (JDreamIII)

**C.    DOCUMENTS CONSIDERED TO BE RELEVANT**

| Category* | Citation of document, with indication, where appropriate, of the relevant passages | Relevant to claim No. |
|---|---|---|
| A | WO 2020/195298 A1 (NATIONAL UNIVERSITY CORPORATION KAGAWA UNIVERSITY) 01 October 2020 (2020-10-01) entire text | 1-14 |
| A | JP 2013-56789 A (MITSUBISHI CHEMICAL CORP) 28 March 2013 (2013-03-28) entire text | 1-14 |
| A | JP 2016-60661 A (TOKUYAMA CORP) 25 April 2016 (2016-04-25) entire text | 1-14 |
| A | WO 2016/092951 A1 (SHOWA DENKO K.K.) 16 June 2016 (2016-06-16) entire text | 1-14 |
| A | 楠瀬　尚史　ほか, 凝集窒化ホウ素フィラー添加によるエポキシハイブリッド材料の熱伝導異方性の改善, 日本セラミックス協会２０１８年年会講演予稿集, 2018 entire text, (KUSUNOSE, Takafumi et al.), non-official translation (Improvement of anisotropic thermal conductivity of epoxy hybrid materials by addition of agglomerated boron nitride filler. Lecture Preprints of the Ceramic Society of Japan Annual Meeting 2018.) | 1-14 |

☑ Further documents are listed in the continuation of Box C.          ☑ See patent family annex.

| | |
|---|---|
| *    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed | "T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family |

| Date of the actual completion of the international search | Date of mailing of the international search report |
|---|---|
| **02 October 2023** | **10 October 2023** |

| Name and mailing address of the ISA/JP | Authorized officer |
|---|---|
| **Japan Patent Office (ISA/JP)**
**3-4-3 Kasumigaseki, Chiyoda-ku, Tokyo 100-8915**
**Japan** | |
| | Telephone No. |

Form PCT/ISA/210 (second sheet) (January 2015)

## INTERNATIONAL SEARCH REPORT

| International application No. |
| --- |
| **PCT/JP2023/028913** |

**C.     DOCUMENTS CONSIDERED TO BE RELEVANT**

| Category* | Citation of document, with indication, where appropriate, of the relevant passages | Relevant to claim No. |
| --- | --- | --- |
| A | 卯野　佳範　ほか, 微細な窒化ホウ素を原料とした窒化ホウ素凝集フィラーの合成：その２, 日本セラミックス協会第３１回秋季シンポジウム講演予稿集, 2018 entire text, (UNO, Yoshinori et al.), non-official translation (Synthesis of agglomerated boron nitride filler using fine boron nitride as raw material: Part 2. Lecture Preprints of the 31st Fall Meeting of the Ceramic Society of Japan.) | 1-14 |
| A | KUSUNOSE, Takafumi et al. Thermal conductivity of hot-pressed hexagonal boron nitride. Scripta Materialia. 2016 entire text | 1-14 |
| A | WO 2020/090240 A1 (HITACHI METALS, LTD.) 07 May 2020 (2020-05-07) entire text | 1-14 |

Form PCT/ISA/210 (second sheet) (January 2015)

## INTERNATIONAL SEARCH REPORT
### Information on patent family members

International application No.

**PCT/JP2023/028913**

| Patent document cited in search report | | | Publication date (day/month/year) | Patent family member(s) | | | Publication date (day/month/year) |
|---|---|---|---|---|---|---|---|
| WO | 2020/195298 | A1 | 01 October 2020 | TW entire text | 202039359 | A | |
| JP | 2013-56789 | A | 28 March 2013 | (Family: none) | | | |
| JP | 2016-60661 | A | 25 April 2016 | (Family: none) | | | |
| WO | 2016/092951 | A1 | 16 June 2016 | TW entire text | 201630806 | A | |
| WO | 2020/090240 | A1 | 07 May 2020 | US entire text | 2021-0316990 | A1 | |
| | | | | CA | 003110834 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013147363 A

- WO 2020195298 A